(19)

Europäisches
Patentamt
European
Patent Office
Office européen
des brevets

(11) **EP 4 256 272 B1**

(12) **EUROPÄISCHE PATENTSCHRIFT**

(45) Veröffentlichungstag und Bekanntmachung des Hinweises auf die Patenterteilung:
**10.09.2025   Patentblatt 2025/37**

(21) Anmeldenummer: **21834715.1**

(22) Anmeldetag: **02.12.2021**

(51) Internationale Patentklassifikation (IPC):
*G01B 11/06* (2006.01)

(52) Gemeinsame Patentklassifikation (CPC):
**G01B 11/06**

(86) Internationale Anmeldenummer:
**PCT/DE2021/100962**

(87) Internationale Veröffentlichungsnummer:
**WO 2022/117156 (09.06.2022 Gazette 2022/23)**

(54) **THZ-SENSOR UND THZ-MESSVERFAHREN ZUM VERMESSEN EINES MESSOBJEKTES**

THZ SENSOR AND THZ METHOD FOR MEASURING AN OBJECT TO BE MEASURED

CAPTEUR THZ ET PROCÉDÉ THZ DE MESURE D'UN OBJET À MESURER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **04.12.2020  DE 102020132330**

(43) Veröffentlichungstag der Anmeldung:
**11.10.2023   Patentblatt 2023/41**

(73) Patentinhaber: **CiTEX Holding GmbH**
**49324 Melle (DE)**

(72) Erfinder:
• **WINKING, David**
**49124 Georgsmarienhütte (DE)**
• **DR. EGGERT, Juliane**
**49084 Osnabrück (DE)**
• **BÖHM, Roland**
**48341 Altenberge (DE)**

(74) Vertreter: **Bremer, Ulrich**
**Advopat**
**Patent- und Rechtsanwälte**
**Theaterstraße 6**
**30159 Hannover (DE)**

(56) Entgegenhaltungen:
WO-A1-2022/057980      DE-A1- 102015 122 205
DE-A1- 102017 125 555   DE-B3- 102016 120 665
JP-A- 2008 283 552      JP-A- 2013 149 846

• QU SHI-WEI ET AL: "Terahertz Reflecting and Transmitting Metasurfaces", PROCEEDINGS OF THE IEEE, IEEE. NEW YORK, US, vol. 105, no. 6, 1 June 2017 (2017-06-01), pages 1166 - 1184, XP011650419, ISSN: 0018-9219, [retrieved on 20170518], DOI: 10.1109/JPROC.2017.2688319
• WU GENG BO ET AL: "High-Gain Circularly Polarized Lens Antenna for Terahertz Applications", IEEE ANTENNAS AND WIRELESS PROPAGATION LETTERS, IEEE, PISCATAWAY, NJ, US, vol. 18, no. 5, 1 May 2019 (2019-05-01), pages 921 - 925, XP011722807, ISSN: 1536-1225, [retrieved on 20190502], DOI: 10.1109/ LAWP.2019.2905872
• KHORSHIDI MOHAMMADREZA ET AL: "Dielectric Structure with Periodic Strips for Increasing Radiation Power of Photoconductive Antennas: Theoretical Analysis", JOURNAL OF INFRARED, MILLIMETER AND TERAHERTZ WAVES, SPRINGER NEW YORK LLC, US, vol. 38, no. 5, 26 January 2017 (2017-01-26), pages 609 - 629, XP036201687, ISSN: 1866-6892, [retrieved on 20170126], DOI: 10.1007/S10762-016-0354-X

**Beschreibung**

Die Erfindung betrifft einen THz-Sensor und ein THz-Messverfahren zum Vermessen eines Messobjektes. Weiterhin ist eine Messvorrichtung vorgesehen. Die Messung kann insbesondere zur Ermittlung von Abständen und/oder Schichtdicken des Messobjektes dienen. Das Messobjekt kann insbesondere ein Rohr aus Kunststoff, Gummi oder einem anderen für THz-Strahlung durchlässigen Material sein.

THz-Sensoren für Schichtdickenmessungen und Abstandsmessungen erzeugen einen THz-Sendestrahl, der entlang einer optischen Achse auf das Messobjekt ausgegeben wird. Hierbei weist der THz-Sensor im Allgemeinen eine Trägereinrichtung, einen THz-Transceiver und eine Linse zum Bündeln der THz-Strahlung auf. Der THz-Transceiver weist hierbei einen Emitter und einen Receiver auf, die insbesondere kombiniert sein können; Emitter und Receiver können aber auch getrennt vorgesehen sein, sodass der Transceiver dann auch durch räumlich getrennte Ausbildungen von Emitter und Receiver gebildet wird.

Vorteilhafterweise weisen THz-Sensoren weiterhin einen Hohlleiter auf, der die von dem THz-Transceiver ausgegebene THz-Strahlung zu der Linse leitet. Die Linse ist z. B. aus einem Kunststoff oder auch Silizium ausgebildet und an ihrer Vorderseite, d. h. in Richtung zu dem Messobjekt hin, z. B. oval ausgebildet, im Allgemeinen mit planer Rückseite. Die ausgegebene THz-Strahlung wird durch die Linse gebündelt und entlang der optischen Achse als THz-Sendestrahl ausgegeben. Der THz-Sendestrahl tritt durch Grenzflächen des Messobjektes, an denen jeweils ein Teil des THz-Sendestrahls aufgrund des Übergangs der Medien mit unterschiedlichem Brechungsindex zurück reflektiert wird. Somit gelangt ein THz-Reflexionsstrahl entlang der optischen Achse zurück zu der Linse, durch die Linse zu dem Hohlleiter und zu dem THz-Transceiver und erzeugt für jede Grenzfläche einen Nutzreflexionspeak, der somit den Zeitpunkt der Reflexion wiedergibt.

Es zeigt sich, dass bei derartigen THz-Vermessungen Mehrfachreflexionen auftreten können, bei denen insbesondere der Reflexionsstrahl durch den THz-Sensor zurück zu dem Messobjekt reflektiert wird, sodass an dessen Grenzflächen wiederum Reflexionen auftreten und zu dem THz-Sensor zurück gelangen. In dem Messsignal treten derartige Mehrfachreflexionen aufgrund der längeren Laufzeit als weitere Messpeaks auf, die das Messsignal beeinträchtigen. Weiterhin können störende Reflexionen an der Linse bzw. den Linsenflächen auftreten, z.B. von der Linsenoberfläche zu dem Hohlleiter zurückgeworfen wird.

Die JP 2013-149846A beschreibt ein THz-Wellen-Erzeugungselement, das ausgebildet werden kann, um die Stärke einer Strahlung bei Verwendung einer konventionellen Antenne und eines Substrates beizubehalten. Hierbei wird eine Anregung durch Multiphotonen-Absorption ausgebildet, wodurch die Absorption der THz-Welle durch das Substrat verringert werden kann.

Die DE 10 2016 120 665 B3 beschreibt eine Radarsensoreinheit zum Einsatz in Raumumgebungen, insbesondere in ölgefüllten Hydraulikzylindern, mit einer Radarelektronik, die mindestens eine Hochfrequenzantenne zum Aussenden und Empfangen von hochfrequenter Strahlung aufweist. Weiterhin sine eine Linse zum Bündeln der hochfrequenten Strahlung und ein Träger aus Metall mit einer Aussparung zur Montage der Radarelektronik vorgesehen. Die Radarsensoreinheit arbeitet vorzugsweise im GHz- oder THz-Bereich. Die Radarelektronik ist von einem robusten Gehäuse umgeben, welches im Wesentlichen ausschließlich aus der Linse und dem Träger ausgebildet ist.

Die JP 2002-223017A beschreibt eine THz-Einrichtung und eine Vorrichtung zum Erzeugen von THz-Licht sowie eine Vorrichtung zum Detektieren der THz-Strahlung, bei der der Verlust an THz-Strahlung verringert werden soll.

Die JP 2015-188174A beschreibt ein MMIC - integriertes Modul, bei dem zur Verbesserung der Strahlungseffizienz einer Radio-Welle eine metallische Reflexionsplatte auf einem Untergrund einer kleinen Kavität gegenüberliegend zu einer Antenne eines MMIC-Chips ausgebildet ist.

Die DE 10 2015 122 205 A1 beschreibt eine THz-Messvorrichtung zum Messen einer Schichtdicke und/oder eines Abstandes, wobei mehrere Messungen in unterschiedlichen optischen Achsen durchgeführt werden und die optische Achse der ausgesandten THz-Strahlung während der Messung oder zwischen den Messungen verstellt wird, wobei eine oder mehrere Messungen zur Ermittlung einer Schichtdicke herangezogen werden.

Die WO2021123111A1 beschreibt eine Hohlleiteranordnung zum Leiten elektromagnetischer Wellen in einem von leitfähigem Material umgebenen Hohlraum, wobei die Hohlleiteranordnung ein Leiterplattenmaterial aufweist, das einen elektrisch leitfähigen, plattenförmigen Rücken, ein Substrat und eine auf einer dem Rücken abgewandten Seite des Substrats angeordnete Leitschicht aufweist. Erfindungsgemäß ist vorgesehen, dass der Rücken eine, bevorzugt durch mindestens eine Ausnehmung gebildete, Oberflächenstruktur aufweist, durch die der wellenführende Hohlraum zumindest teilweise unmittelbar begrenzt ist; und/oder dass der Hohlraum in Split-Block-Technologe durch Verbinden des Leiterplattenmaterials als Split-Block- Unterteil mit einer korrespondierenden Abdeckung als Split-Block-Oberteil gebildet ist.

Die JP 2008-283552 A beschreibt einen THz-Wellengenerator und THz-Wellendetektor, wobei ein Substrat, das die THz-Wellen erzeugt, automatisch einer Linsenachse angepasst wird und eine THz-Welle effektiv entnommen wird, wobei der THz-Wellengenerator eine Halteeinrichtung mit einem Durchgangsloch, das THz-Wellen erzeugende Substrat und eine Linse aufweist.

Die DE 10 2017 125 555 A1 beschreibt eine THz-Messvorrichtung zur Messung mindestens einer Schichtdicke eines Messobjektes, mit einem THz-Transceiver zum Aussenden und Empfangen von Strahlung, wobei eine Kompensationseinrichtung zum Aussenden eines Kompensationsstrahls zu dem THz-Transceiver zur zumindest teilweisen Kompensation mindestens eines Reflexionsstrahls durch destruktive Interferenz vorgesehen ist.

WO 2022/057980 A1 zeigt eine THz-Messvorrichtung zur Vermessung eines Prüfobjektes, insbesondere eines Rohres, bei der ein erster THz-Transceiver einen ersten THz-Strahl mit einer ersten Polarisationsebene ausgibt und ein zweiter THz-Transceiver einen zweiten THz-Strahl mit einer von der ersten Polarisationsebene verschiedenen zweiten Reaktionsebene ausgibt, insbesondere entlang einer gemeinsamen optischen Achse.

Der Erfindung liegt die Aufgabe zugrunde, einen THz-Sensor sowie ein THz-Messverfahren zu schaffen, die genaue THz-Messungen ermöglichen.

Diese Aufgabe wird durch einen THz-Sensor und ein THz-Messverfahren nach den unabhängigen Ansprüchen gelöst. Die Unteransprüche beschreiben bevorzugte Weiterbildungen. Hierbei ist weiterhin eine THz-Messvorrichtung mit dem THz-Sensor vorgesehen. Das erfindungsgemäße THz-Messverfahren kann insbesondere mit dem erfindungsgemäßen THz-Sensor und/oder der erfindungsgemäßen THz-Messvorrichtung durchgeführt werden.

Weiterhin ist vorzugsweise eine Anordnung aus der THz-Messvorrichtung mit dem Messobjekt vorgesehen, insbesondere eine Anordnung, bei der das Messobjekt in einem Messraum der THz-Messvorrichtung aufgenommen ist.

Somit wird die THz-Strahlung in einem Kompensationsbereich zwischen der Linse und der Trägereinrichtung durch eine Kompensations-Ausbildung beeinflusst. Durch diese Beeinflussung wird eine Reflexion des Reflexionsstrahls an dem THz-Sensor derartig verändert, dass die Mehrfach-Reflexionspeaks zumindest verringert bzw. verhindert werden.

Erfindungsgemäß wird erkannt, dass eine Beeinflussung in diesem Bereich ausreichend sein kann, um die Mehrfachreflexionen im Nutzsignal zu verringern.

Vorteilhafterweise weist der THz-Sensor einen Hohlleiter auf, der die THz-Strahlung zwischen dem THz-Transceiver und der Linse leitet. Hierbei wird vorteilhafterweise ein um die optische Achse herum gebildeter, zentraler Detektionsbereich vor und neben dem Hohlleiter, nicht durch die Kompensations-Ausbildung beeinflusst. Dem liegt die Erkenntnis zugrunde, dass die Reflexionen am Sensor, die zu den störenden Mehrfach-Reflexionen führen, insbesondere außerhalb des zentralen Detektionsbereichs auftreten und somit die Kompensation hierauf beschränkt werden kann, ohne das Messsignal im zentralen Detektionsbereich zu stören.

Die Kompensationsausbildung kann insbesondere in einem unmittelbar um den Detektionsbereich vorliegenden bzw. an den Detektionsbereich angrenzenden, z.B. ringförmigen Anschlussbereich ausgebildet sein, da dieser den größten Beitrag zu den Mehrfachreflexion liefert.

Der Kompensationsbereich kann vorzugsweise an der Linse, insbesondere dem hinteren Teil der Linse, und/oder an der Trägereinrichtung, insbesondere einer Vorderseite der als Trägereinrichtung dienenden Trägerplatte, und/oder in dem Zwischenraum zwischen Linse und Trägereinrichtung vorgesehen sein. Je nach Art der Kompensation können somit geeignete Stellen gewählt werden.

Es sind mehrere Möglichkeiten der Beeinflussung allein oder in Kombination vorgesehen, wobei gemäß der Erfindung allerdings jeweils die THZ-Strahlung polarisiert ausgegeben wird und lediglich ein polarisierter THz-Strahl detektiert wird:

a) die Ausgabe und Detektion von in einer Polarisationsrichtung polarisierter THz-Strahlung, wobei die Polarisation in dem Kompensationsbereich beeinflusst, insbesondere gedreht wird, vorzugsweise um 90°. Indem somit die Polarisation der Reflexionsstrahlung in dem zentralen Detektionsbereich nicht verändert wird, kann diese aufgenommen werden; hingegen wird die Störstrahlung bzw. außerhalb des zentralen Detektionsbereich auftreffende Strahlung gedreht, so dass sie nach erneuter Reflexion am Messobjekt oder auch an der Linsenoberfläche mit der gedrehten Polarisation auftrifft und somit nicht detektiert wird.

Vorteilhafterweise gibt der Hohlleiter polarisierte THz-Strahlung aus, wozu der Hohlleiter z.B. geeignet ausgebildet sein kann, oder es wird ein zusätzlicher Polarisationsfilter eingesetzt.

Hierbei kann die Drehung gemäß einer Ausführungsform durch eine Transpolarisations-Struktur erfolgen, die in der lateralen Ebene, d.h. senkrecht zur optischen Achse, unter einem Transpolarisations-Winkel, insbesondere 45°, gegenüber der Polarisationsrichtung (Y) verläuft.

Die Transpolarisations-Struktur kann mit geringem Aufwand, geringen Kosten und hoher Genauigkeit ausgebildet werden. Sie liegt zudem in einem mechanisch geschützten Bereich und ist somit keinem direkten Verschleiß unterworfen.

Bei einer Drehung um z.B. 90°, bei der somit keine Komponente in der ordnungsgemäßen Ebene verbleibt, kann erst die doppelt zurückreflektierte Strahlung, d.h. ein Dreifach-Reflexionspeak, wieder aufgenommen werden kann, der jedoch einen sehr geringen Beitrag liefert.

Die Transpolarisations-Struktur kann insbesondere eine oder mehrere der folgenden Eigenschaften aufweisen:

- in der Strukturrichtung verlaufende Profilierungen, z. B. Struktur-Erhöhungen und zwischen den Struktur-Erhöhungen ausgebildete Struktur-Vertiefungen, z. B. als Rechteck-Profilierung,
- eine Struktur-Breite, die kleiner als eine relevante Wellenlänge der THz-Strahlung ist, z. B. im Bereich zwischen einem Zehntel und der halben relevanten Wellenlänge,
- eine Strukturhöhe, z.B. Profilhöhe, die z.B. einem Viertel der relevanten Wellenlänge plus einen ganzzahligen Vielfachen der halben relevanten Wellenläge ist, d.h. z.B. gleich einem Viertel der relevanten Wellenlänge,

z.B. mit h16 = $\lambda/4 + n * \lambda/2$,
mit $\lambda$ als relevante Wellenlänge, h16 als Strukturhöhe, z.B. Profilhöhe,
n als ganze Zahl bzw. Vielfaches einschließlich Null,

d.h. z.B. $\quad h16 = 0 * \dfrac{\lambda}{2} + \dfrac{\lambda}{4}, \ 1 * \dfrac{\lambda}{2} + \dfrac{\lambda}{4}, \ 2 * \dfrac{\lambda}{2} + \dfrac{\lambda}{4} \ ...$ Hierbei kann die relevante Wellenlänge insbesondere die kürzeste Wellenlänge oder eine mittlere Wellenlänge der ausgesandten THz-Strahlung sein.

Erfindungsgemäß kann die relevante Wellenlänge für die verschiedenen Strukturierungen vorteilhafterweise jeweils geeignet gewählt werden. So kann insbesondere

- für die Auslegung der Struktur-Breite die kürzeste Wellenlänge der ausgesandten THz-Strahlung als relevante Wellenlänge gewählt werden,
- und/oder für die Auslegung der Strukturhöhe eine mittlere Wellenlänge der ausgesandten THz-Strahlung als relevante Wellenlänge gewählt werden.

b) eine Dämpfung der THz-Strahlung, d.h. insbesondere der auftreffenden Reflexionsstrahlung und/oder der vom Sensor zurückreflektierten Strahlung in dem Kompensationsbereich. Hierzu kann in dem Kompensationsbereich ein Dämpfungsmedium vorgesehen sein, das somit den zentralen Detektionsbereich nicht stört. Der von der Mehrfachreflexionsstrahlung mindestens zweimal durchlaufene Kompensationsbereich kann somit eine effektive Dämpfung vorsehen. Das Dämpfungselement kann zwischen Linse und Trägereinrichtung aufgenommen und somit ohne großen Aufwand befestigt sein. Es kann sicher abgedeckt bzw. vor weiterer Beeinflussung und Verschmutzung geschützt werden.
Das Dämpfungsmedium dämpft die THz-Strahlung insbesondere in einem relevanten Wellenlängenbereich, z.B. einem Wellenlängenbereich um eine mittlere Wellenlänge.
Vorteilhafterweise weist das Dämpfungsmedium einen Brechungsindex auf, der insbesondere am Übergang zur Linse dem Brechungsindex der Linse entspricht, sodass zwischen der Linsen- Rückseite und dem Dämpfungsmedium keine weitere Reflexion erfolgt, sondern insbesondere nur eine Reflexion zwischen dem Dämpfungsmedium und dem Metall der Reflexionsebene bzw. der Vorderseite der Trägerplatte. Hierbei kann das Dämpfungsmedium einen Brechungsindex aufweisen, der einheitlich ist und dem Brechungsindex der Linse entspricht, oder nur am Übergang dem Brechungsindex der Linse entsprechen und z.B. anschließend einen sich ändernden Verlauf aufweist.
c) Ablenken oder Reflektieren der THz-Strahlung zumindest teilweise in einer zur optischen Achse senkrechten Richtung, d.h. insbesondere nach außen.
Hierzu ist z.B. eine Abschrägung an der Vorderseite der Trägereinrichtung vorgesehen, insbesondere in dem zentralen Anschlussbereich um den Detektionsbereich herum. Es zeigt sich, dass eine derartige Abschrägung der Vorderseite die im Wesentlichen entlang bzw. parallel zur optischen Achse verlaufende Reflexionsstrahlung bereits hinreichend nach außen weg lenken kann, so dass sie nicht nach vorne durch die Linse zu dem Messobjekt geleitet und dort erneut reflektiert und anschließen detektiert wird. Hierbei zeigen Ermittlungen, dass insbesondere der zentrale Anschlussbereich um den Detektionsbereich herum für einen Großteil der doppelt reflektierten Strahlung verantwortlich ist und somit die Abschrägung in diesem Anschlussbereich besonders vorteilhaft ist.
d) Ausbilden einer destruktiven Interferenz, insbesondere durch Reflexion der THz-Strahlung in zueinander versetzten Reflexionsflächen einer Interferenz-Struktur. Es wird erkannt, dass eine geeignete Formgebung bzw. Strukturierung der Linsenrückseite zu einer Kompensation durch destruktive Interferenz führt, z.B. durch Profilierung mit Höhenunterschieden in Abhängigkeit einer relevanten Wellenlänge. Hierbei kann insbesondere auch eine destruktive Interferenz von mehr als nur einer relevanten Wellenlänge vorgesehen sein, z.B. mehreren Wellenlängen im Wellenlängenbereich der ausgesandten THz-Strahlung.
Die Strukturierung kann mit geringem Aufwand, geringen Kosten, ohne zusätzlichen Materialaufwand, in einem geschützten Bereich und insbesondere mit hoher Genauigkeit ausgebildet werden, da die THz-Strahlung im Millimeter- oder Zentimeter-Bereich genauer Strukturierungen zulässt. Die destruktive Interferenz des erneut reflektierten Reflexionsstrahls kann insbesondere durch eine Interferenz-Struktur mit einer Strukturierung in Abhängigkeit einer relevanten Wellenlänge, z. B. einem Viertel der mittleren Wellenlänge erfolgen.

e) Ausbilden einer destruktiven Interferenz, insbesondere durch Auftragen einer oder mehrerer Schichten aus mindestens einem Material, das einen anderen Brechungsindex, d.h. höher oder niedriger, als das Material der Linse aufweist, mit destruktiver Interferenz

- des Reflexionsstrahls an dem Übergang der Linsenoberfläche zu der Schicht,
- und des Reflexionsstrahls an dem Übergang der Schicht zu dem nachfolgenden Medium, das insbesondere eine Luftschicht, eine Metallschicht oder ein anderes Material sein kann.

Hierbei können somit vier Fälle unterschieden werden, je nach Verhältnis der Medien an den Übergängen bzw. Grenzschichten.

Hierbei kann das Medium durch Luft oder z.B. auch als Metallbeschichtung gewählt werden.

Diese Ausführungsform lässt sich aber auch vorteilhaft mit der Ausführungsform der Dämpfung kombinieren.

Erfindungsgemäß zeigt sich insbesondere auch, dass diese verschiedenen Ausführungsformen in geeigneter Weise miteinander kombiniert werden können, d. h. sich geeignet ergänzen und sich nicht stören. So ermöglicht die Abschrägung, dass ein Zwischenraum freigelassen wird, in den dann ergänzend das Dämpfungsmedium eingebracht werden kann. Auch die Transpolarisations-Struktur kann z. B. in geeigneter Weise mit dem Dämpfungsmedium kombiniert werden, ohne dass der Abstand der Trägereinrichtung bzw. Trägerplatte zur Linse zu ändern ist. Die Trägerplatte kann somit weiterhin die Linse sicher und fest aufnehmen.

Gemäß einer vorteilhaften Weiterbildung kann der Hohlleiter durch zwei Hohlleiter-Kanäle ausgebildet sein, die durch ihre längliche Form, z. B. Rechteckform jeweils nur eine lineare Polarisierung unterstützen. Hierbei schließen sich an die Hohlleiter-Kanäle vorzugsweise Einkoppelpunkte an, die zusammen den Kompensationsbereich bilden bzw. Teil des den Kompensationsbereichs sind. Somit wird eine Einkopplung in zueinander orthogonale Richtungen erreicht.

Gemäß einer vorteilhaften Weiterbildung kann ein OMT, d.h. Orthomoden Transducer, bzw. Orthomoden-Koppler vorgesehen sein, der zirkular polarisierte Wellen aufteilt, bzw. orthogonal polarisierte Wellen zusammenführt. Hierdurch wird eine kompakte und technisch sichere Aufteilung erreicht.

Die THz-Frequenz kann insbesondere im Bereich von 10 GHz bis 10 THz, z. B. 50 GHz bis 4 THz, z. B. 50 GHz bis 1 THz liegen, und mit direkter Laufzeitmessung, Frequenzmodulation oder gepulster Strahlung erfolgen. Somit kann die THz-Strahlung vorzugsweise auch Radar-Strahlung und/oder Mikrowellenstrahlung erfassen.

Für die Ausbildung mit polarisiertem Licht ist insbesondere eine Frequenzmodulation vorteilhaft, insbesondere als FMCW-Radar, d.h. frequenzmodulierte kontinuierliche Radar-Strahlung.

Die Erfindung wird im Folgenden anhand beiliegender Zeichnungen an einigen Ausführungsformen erläutert. Es zeigen:

Fig. 1     eine THz-Messvorrichtung zur Vermessung eines Rohres als Messobjekt;
Fig. 2     den Aufbau eines THz-Sensors in Seitenansicht;
Fig. 3     eine Aufsicht auf den Sensorträger ohne Linse;
Fig. 4     ein Diagramm eines Messsignals mit Mehrfachreflexionen;
Fig. 5     eine Ausführungsform mit Transpolarisation;
Fig. 6     die Ausbildung des Sensors mit transpolarisierender Struktur;
Fig. 7     eine Ausführungsform mit Dämpfung der Reflexionen;
Fig. 8     einen unveränderten Sensor und darunter eine Ausführungsform mit Abschrägung der Reflexionsebene;
Fig. 9     eine Ausführungsform unter Strukturierung der Reflexionsebene für eine destruktive Interferenz;
Fig. 10    den Aufbau eines THz-Sensors in geschnittener Seitenansicht, entsprechend Fig. 2;
Fig. 11    Ausführungsformen mit Beschichtung der Linse zur destruktiven Interferenz;
Fig. 12    eine weitere Ausführungsform mit zwei Kanälen,
Fig. 13    einen Schnitt durch die Linse aus Fig. 12,
Fig. 14    eine weitere Ausführungsform mit einem OMT.

Eine THz-Messvorrichtung 1 weist unter anderem einen THz-Sensor 2 mit einer Verstellvorrichtung 3 und einer Steuereinrichtung 4 sowie einem Messraum 5 auf und dient zur Vermessung eines Messobjektes 6, z. B. eines Rohres aus Kunststoff, Gummi, aber z.B. auch Papier, wobei das Rohr 6 entlang seiner Rohrachse, d. h. insbesondere der Symmetrieachse B des Messraums 5, gefördert wird. Neben einem Rohr bzw. runden Rohr können z.B. auch ein viereckiges Rohr oder ein Profil, z.B. ein Fensterprofil, eine Rinne, z.B. eine Regenrinne, und andere Geometrien erfasst werden. Durch die THz-Vermessung können Schichtdicken und Abstände, sowie auch der Brechungsindex $\varepsilon6$ des Materials gemessen werden, insbesondere nach der Extrusion des Rohres 6, um z.B. Fehlstellen und Deformationen zu ermitteln. Der THz-Sensor 2 kann in Umfangsrichtung um den Messraum 5 bzw. die Symmetrieachse B geführt werden, um das Rohr 6 vollumfänglich zu vermessen. Weiterhin können auch mehrere THz-Sensoren 2 in Umfangsrichtung um den Messraum 5 herum angeordnet sein, z. B. auch mit gemeinsamer rotatorischer Verstellung.

Der THz-Sensor 2 gibt einen THz-Sendestrahl 8 entlang seiner optischen Achse A in den Messraum 5 und auf das Messobjekt 6 aus. Hierbei weist der THz-Sensor 2 einen THz-Transceiver 10, z.B. als Sensor-Chip, auf, der auf einer Trägerplatte 11 angebracht ist, einen vor bzw. auf dem THz-Transceiver 10 angeordneten Hohlleiter 12 und eine z. B. aus Kunststoff oder Silizium ausgebildete Linse 14 auf. Die vom THz-Transceiver 10 ausgebebene THz-Strahlung wird zunächst über den Hohlleiter 12 geleitet und gelangt anschließend durch die Linse 14, die die THz-Strahlung bündelt und somit den THz-Sendestrahl 8. ausbildet, wobei insbesondere eine Fokussierung des THz-Sendestrahls 8 z. B. auf die Symmetrieachse B und/oder das Messobjekt 6 vorgesehen sein kann. Die Fokussierung kann z.B. über die Verstelleinrichtung 3 erfolgen.

Der THz-Sendestrahl 8 gelangt von dem THz-Sensor 2 entlang der optischen Achse A durch das Messobjekt 6, wobei an Grenzflächen g1, g2, g3, g4 von Material mit unterschiedlichem Brechungsindex $\varepsilon$ eine Teil-Reflexion erfolgt, sodass ein THz-Reflexionsstrahl 15 entlang der optischen Achsen A zu dem THz-Sensor 2 zurück reflektiert wird. Bei dem hier gezeigten einschichtigen Rohr 6 erfolgen somit Reflexionen an der vorderen Außenfläche g1 zwischen Luft und dem Rohr 6, nachfolgend an der Grenzfläche g2 beim Austreten aus dem Rohr 6 in dessen Innenraum, und entsprechend nachfolgende Reflexionen an Grenzflächen g3, g4 beim Eintritt in das Rohr 6 und beim nachfolgenden Austritt. Ergänzend kann hinter dem Rohr 6 ein Spiegel zur Sensierung einer Totalreflexion vorgesehen sein. Die Grenzflächen g1, g2, g3, g4 erzeugen somit Teilreflexionen in dem Reflexionsstrahl 15. Somit gibt der THz-Sensor 2 ein ordnungsgemäßes Messsignal S1 mit jeweils einem Nutzpeaks P0 entsprechend der jeweiligen Teilreflexion an jeder Grenzfläche g1, g2, g, g4 aus, aus dem somit von der Steuereinrichtung 4 als Laufzeitmessung Schichtdicken und Abstände sowie Materialeigenschaften wie der Brechungsindex $\varepsilon 6$ ermittelt werden können. Hierbei kann der Brechungsindex $\varepsilon 6$ als Verhältnis der Lichtgeschwindigkeit c0 im Vakuum (bzw. der Luft) zur Lichtgeschwindigkeit c6 im Material des Rohres 6 ermittelt, d. h. $\varepsilon 6$ = c0 / c6).

Die THz-Strahlung zur Ausbildung des THz-Sendestrahls 2 kann insbesondere im Frequenzbereich zwischen 10 GHz und 10 THz, z. B. zwischen 50 GHz und 5 THz, liegen. Sie kann somit in Gigahertz- und Terahertz-Bereich liegen, d. h. insbesondere auch den Radarbereich und Mikrowellenbereich ganz oder teilweise mit umfassen. Der THz-Sendestrahl 2 kann hierbei als direkte Laufzeitmessung, aber auch durch Frequenzmodulation, sowie auch mit gepulster Strahlung ausgebildet werden.

In einem XYZ-Koordinatensystem verläuft die X-Richtung entlang der optischen Achse A, entsprechend die YZ-Ebene hierzu senkrecht bzw. lateral.

Die Linse 14 ist im Wesentlichen nach vorne, d.h. in x-Richtung zum Messobjekt 6 hin, tropfenförmig bzw. oval ausgebildet und mit ihrer z.B. planen Rückseite 14a an der Vorderseite 11a der Trägerplatte 11 aufgesetzt und befestigt.

Ein zentraler Detektionsbereich 7 erstreckt sich in der lateralen YZ-Ebene um die optische Achse A herum und um den Hohlleiter 12 bzw. in X-Richtung nach vorne um die optische Achse A herum. Somit wird der Reflexionsstrahl 15, der in diesem zentralen Detektionsbereich 7 auftrifft, von dem Hohlleiter 12 aufgenommen und vom dem THz-Transceiver 10 detektiert.

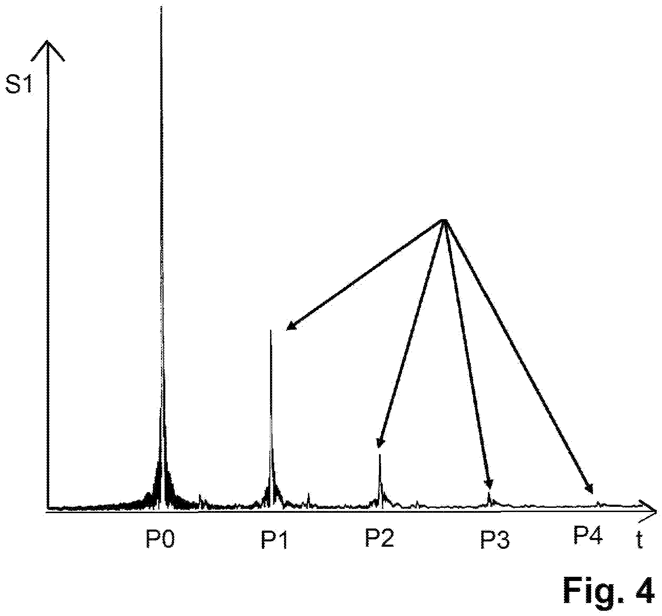

Figur 4 zeigt ein zeitliches Diagramm eines Messsignals S1 mit einem Nutzsignal-Peak P0, der durch ordnungsgemäße Reflexion des THz. Sendestrahls 8 an einer Grenzfläche, z.B. g1, erzeugt wird. Zusätzlich zu dem Nutzsignal-Peak P0 treten grundsätzlich ungewollte Mehrfachreflexionen auf, die wie in Fig. 4 gezeigt zu Mehrfachreflexions-Peaks P1, P2, P3,... führen können. Der vom THz-Sensor 2 entlang der optischen Achse A auf das Messobjekt 6 ausgesandte und an den Grenzflächen g1, g2, g3 und g4 reflektierte Reflexionsstrahl 15 gelangt wiederum durch die Linse 14, wobei der zentral im Detektionsbereich 7 einfallende Teil des Reflexionsstrahls 15 in den Hohlleiter 12 und zum THz-Transceiver 10 gelangt und den Nutz-Reflexionspeak P0 erzeugt. Im Messsignal S1 tritt somit gemäß Fig. 4 der Nutzreflexionspeak P0 mit einer Laufzeit auf, die dem Abstand d1 der Grenzfläche g1 gegenüber dem THz-Transceiver 10 entspricht. Hierbei werden Abstände als zweifache Laufstrecke der THz-Strahlung von dem Sensor 2 zu der Grenzfläche g1 und zurück zu dem Sensor 2 ermittelt.

Ein Teil des Reflexionsstrahls 15 gelangt in der lateralen YZ-Ebene außerhalb des Detektionsbereichs 7 gegen z.B. die Vorderseite 11a der Trägerplatte 11, wird dort wiederum reflektiert und gelangt somit wieder in X-Richtung nach vorne durch die Linse 14, im Wesentlichen entlang der optischen Achse A auf das Messobjekt 6, so dass er wiederum an den Grenzflächen g1, g2, g3 und g4 teilweise reflektiert wird und als Zweifach-Reflexionsstrahl 15-2 zurück zu dem Sensor 2 gelangt und vom THz-Transceiver 10 aufgenommen wird. Somit tritt zeitlich nachfolgend durch die Zweifachreflexion an der ersten Grenzfläche g1 ein zusätzlicher Messpeak P1 auf, der bei ordnungsgemäßer Auswertung einem Messpeak bzw. Nutzreflexionspeak in einem Abstand entspricht, der aufgrund des weiteren Weges bzw. Laufzeit zusätzlich zu dem Abstand d1 dem Abstand d2 von der Vorderseite 11a zu der Grenzfläche g1 entspricht. Somit kann die Detektion einer vermeintlichen Grenzfläche im Abstand d1+d2 erfolgen.

Durch die Mehrfach-Reflexion können somit in Figur 4 Mehrfach- Reflexionspeaks P1, P2, P3.. entstehen, die in Bereichen liegen, in denen auch ordnungsgemäße Messpeaks zu erwarten sind, da z.B. der vordere Wandbereich mit den Grenzflächen g1, g2 zeitlich vor dem hinteren Wandbereich mit den Grenzflächen g3, g4 liegt, sodass der Zweifachreflexionspeak von g1 in den zeitlichen Bereich von g3 oder g4 gelangen kann. Somit kann durch die Überlagerung die Auswertung beeinträchtigt werden.

Erfindungsgemäß ist eine Kompensations-Ausbildung 17 vorgesehen, die in mehreren Ausführungsformen gezeigt wird. Sie dient zur Kompensation, insbesondere zur Vermeidung bzw. Verringerung der Mehrfachreflexionspeaks, insbesondere der Zweifachreflexionspeaks P1. Die Kompensations-Ausbildung 17 ist insbesondere in einem Kompensationsbereich 9 vorgesehen, der zwischen der Linse 14 und der Trägerplatte 11 ausgebildet ist.

Der Kompensationsbereich 9

- erstreckt sich in der YZ-Ebene insbesondere außerhalb des zentralen Detektionsbereichs 7, um das direkt aufgenommene Messsignal der ordnungsgemäßen Einfach-Reflexion, d.h. mit dem Nutzreflexionspeak P0, nicht zu beeinflussen,
- wobei er sich in X-Richtung die Rückseite 14a der Linse 14, die Vorderseite 11a der Trägerplatte 11 und einen gegebenenfalls dazwischen ausgebildeten Zwischenraum umfassen kann.

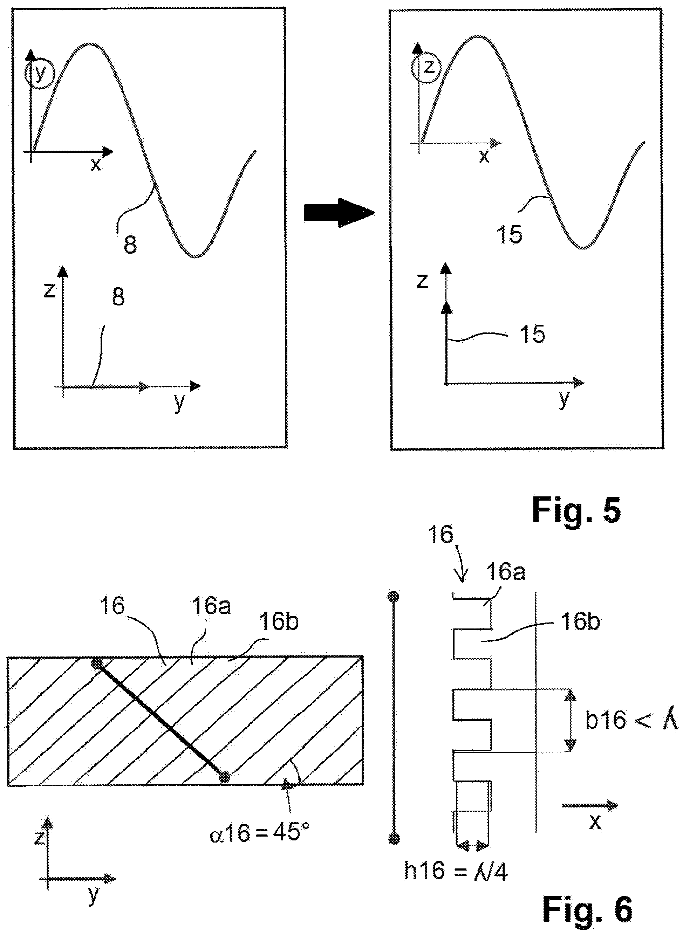

Figur 5, 6 zeigen eine Ausführungsform mit Transpolarisation. Hierbei wird von dem THz-Sensor 2 ein polarisierter THz-Sendestrahl 8 ausgegeben, der z.B. in der xy-Ebene schwingt. In dem Kompensationsbereich 9 ist eine in Fig. 6 gezeigte Transpolarisations-Struktur 16 ausgebildet, die die Polarisationsebene einfallender THz-Strahlung um 90° dreht. Somit wird bei der zweiten Reflexion des Reflexionsstrahls 15 die Polarisation um 90 ° gedreht, so dass der reflektierte Strahl gegenüber dem Sendestrahl 8 eine um 90 ° gedrehte Polarisation aufweist und z.B. in der xz-Ebene schwingt. Der zweifach-reflektierte Strahl wird entsprechend wiederum an den Grenzflächen g1, g2, g3, g4 reflektiert und gelangt als Zweifach-Reflexionsstrahl 15-2 zurück durch die Linse 14 zu dem Hohlleiter 12. Da jedoch nur die ausgesandte Polarisationsrichtung des THz-Sendestrahls 8 wieder in den Hohlleiter 12 und zu dem THz-Transceiver 10 einkoppeln kann, wird der Zweifach-Reflexionsstrahl 15-2 nicht mehr gemessen. Grundsätzlich kann der an der Reflexionsebene, d.h. z.B. der Vorderseite 11a erneut reflektierte THZ-Strahl, der somit nach doppelter Drehung der Polarisation wieder in der XY-Ebene schwingt, nachfolgend nach Reflexion an den Grenzflächen g1 bis g4 wiederum zu einem Messpeak führen; dieser ist jedoch entsprechend zum einen deutlich geringer und kann weiterhin gegebenenfalls nachfolgend erkannt und heraus gerechnet werden. Insbesondere sind gemäß den obigen Ausführungen die Zweifachreflexionen problematisch, da insbesondere die Zweifachreflexionen an den vorderen Grenzflächen g1, g2 im Bereich der ordnungsgemäßen Messsignale der hinteren Grenzflächen g3, g4 liegen können und somit schwerer erkannt und herausgerechnet werden können.

Figur 6 zeigt eine vorteilhafte Ausbildung der Transpolarisationsstruktur 16, bei der an der Reflexionsebene, d.h. insbesondere der Vorderseite 11a, eine Profilierung ausgebildet ist, insbesondere als Ausbildung von Struktur-Erhöhungen, d.h. insbesondere Profilen 16a, und Struktur-Vertiefungen 16b. d.h. Nuten oder Rillen. Die Transpolarisationsstruktur 16 kann insbesondere als Rechteck-Struktur ausgebildet sein, d.h. mit senkrechten Wänden zwischen den Profilen 16a und den Nuten 16b, wobei die Transpolarisations-struktur 16 vorzugsweise eine Strukturbreite b16, d.h. die Breite einer Einheit aus Profil 16a und Nut 16b, kleiner der Wellenlänge $\lambda$ oder der mittleren Wellenlänge $\lambda$ aufweist.

So kann die Strukturbreite b16 z. B. im Bereich von 1/10 $\lambda$ bis 1/5 $\lambda$ liegen. Die Profilhöhe h16 kann z. B. im Bereich $\lambda$-Viertel bzw. 1/4 $\lambda$ liegen.

Die Transpolarisations-Struktur 16 verläuft in einem Strukturwinkel $\alpha$16 von 45 ° gegenüber der Y-Richtung und der Z-Richtung in der als YZ-Ebene Reflexionsebene, d.h. insbesondere der Vorderseite 11a.

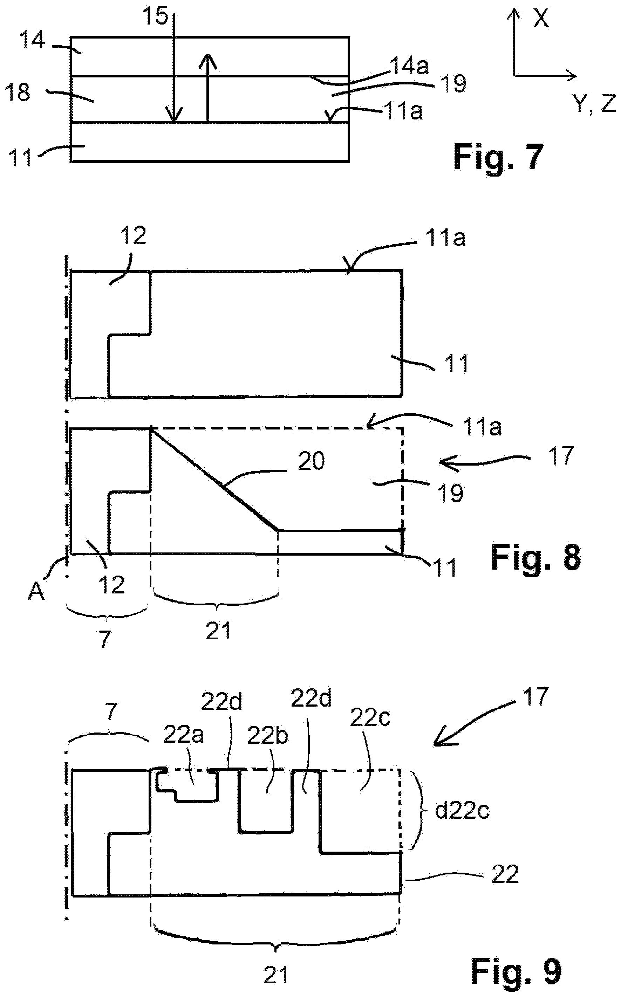

Figur 7 zeigt eine Ausführungsform mit Dämpfung des Reflexionsstrahls 15 durch ein Dämpfungsmedium 18, das in einen Zwischenraum 19 zwischen der Linsen-Rückseite 14a und der Vorderseite 11a der Trägerplatte 11 eingebracht ist, den zentralen Detektionsbereich 7 frei lässt und die THz-Strahlung im relevanten Frequenzbereich dämpft. Ein derartiges Dämpfungsmedium 18 lässt sich als komplexe relative Permittivität $\varepsilon r$ beschreiben, d. h.

$$\varepsilon_r = \varepsilon'_r + i\varepsilon''_r,$$

wobei der Zusammenhang zwischen

der komplexen relative Permittivität $\varepsilon r$,
dem Brechungsindex n und
dem Absorptionskoeffizient k
insbesondere gegen ist durch

$$n^2 = \frac{1}{2}\left(\sqrt{\varepsilon'r^2 + \varepsilon''r^2} + \varepsilon'r\right)$$

Für kleine $\varepsilon''_r$ kann $n^2 = \varepsilon'_r$ angenommen werden
wobei insbesondere der Imaginär-Teil $\varepsilon''_r$ die Dämpfung durch das Dämpfungsmedium 18 angibt.

Hierbei ist die komplexe relative Permittivität nicht beschränkt auf einen konstanten Wert, sondern kann sich auch z.B. auf eine graduelle Weise innerhalb des Mediums ändern, so dass an der Grenzfläche zur Linse kein sprunghafter Unterschied in der Permittivität besteht, aber die Dämpfung z.B. entlang des Strahlpfades immer weiter ansteigt.

Durch das Einbringen des Dämpfungsmediums 18 mit einem hohen Dämpfungswert $\varepsilon''$ kann die Reflexion zwischen Linsen-Rückseite 14a und Metall der Trägereinrichtung bzw. der Vorderseite 11a unterdrückt bzw. stark verringert werden, ohne das Nutzsignal zu beeinträchtigen.

Der Unterschied im Betrag von $\varepsilon_r$ zwischen zwei dielektrischen Medien gibt die Stärke bzw. Höhe der an der jeweiligen Grenzschicht verursachten Reflexion an. Somit lässt sich die Reflexion durch ein Medium bzw. Dämpfungsmedium 18 unterdrücken, das die folgenden Bedingungen erfüllt:

- ein maximaler Dämpfungswert $\varepsilon''_r$ -18 des Dämpfungsmediums 18,

- der Betrag der komplexen relativen Permittivitäten $\varepsilon r$ der Medien 18, 14 entspricht sich am Übergang der Materialen, d.h.

$\varepsilon_r$, 18 = $\varepsilon_r$, 14.

Da der zentrale Detektionsbereich 7 frei gelassen ist, werden weder der THz-Sendestrahl 2 noch zentrale Teil des Reflexionsstrahls 15 gedämpft.

Figur 8 zeigt im oberen Bereich eine unveränderte Ausbildung des Sensors 2 im Detektionsbereich 7 und Anschlussbereich 21, und unterhalb eine Ausführungsform mit Abschrägung zum lateralen Ablenken von störenden Teilen des Reflexionsstrahls 15. Hierbei ist die Trägerplatte 11 an der Trägerplatte-Vorderseite 11a derartig strukturiert, insbesondere abgeschrägt, dass der Reflexionsstrahl 15 außerhalb des zentralen Detektionsbereichs 7 beim Auftreffen auf die Vorderseite 11a der Trägerplatte 11 seitlich etwas abgelenkt wird, d.h. nicht genau senkrecht entlang der optischen Achse A zurück reflektiert wird. Hierbei wird die Reflexionsebene, d.h. die Vorderseite 11a, insbesondere in einem Anschlussbereich 21 in direkter Umgebung des Hohlleiters 12 bzw. des vor dem Hohlleiter ausgebildeten Detektionsbereichs 7 abgeschrägt, so dass um den Hohlleiter 12 herum eine Abschrägung 20, insbesondere lateral nach außen abfallen, ausgebildet ist. Hierbei wurde gemessen, dass dieser zentrale Anschlussbereich 21 um den Hohlleiter 12 herum für einen Großteil der zweifach reflektierten Strahlung verantwortlich ist und somit erfindungsgemäß durch die Abschrägung deutlich verringert wird.

Die Ausführungsformen der Figuren 5, 6, 7, 8, 9 lassen sich in vorteilhafter Weise kombinieren. So kann insbesondere das Dämpfungsmedium 18 zusätzlich zu der Abschrägung 20 vorgesehen sein. Das Dämpfungsmedium 18 kann insbesondere in dem durch die Abschrägung 20 freigelegten Zwischenbereich 19, der in Figur 8 als gestrichelter Bereich gezeigt ist, eingebracht werden. Somit kann auch sichergestellt werden, dass kein Dämpfungsmedium 18 in den Bereich vor den Hohlleiter 12 gelangt.

Figur 9 zeigt eine weitere Ausführungsform zur Unterdrückung der Mehrfachreflexionen, bei der in der Reflexionsebene, d.h. insbesondere der Vorderseite 11a der Trägerplatte 11, außerhalb des Detektionsbereichs 7, insbesondere in dem Anschlussbereich 21, eine Interferenz-Strukturierung 22 ausgebildet ist, die eine möglichst breitbandige destruktive Interferenz des auftreffenden und erneut reflektierten Reflexionsstrahls 15 ermöglicht. Hierzu sind von der Vorderseite 11a ausgehend Struktur- Vertiefungen 22a, 22b, 22c mit unterschiedlichen Tiefen ausgebildet, sodass der Reflexionsstrahl 15 zum einen an den verbleibenden Bereichen 22d der ursprünglichen Oberfläche 11a der Trägerplatte 11, und weiterhin in den unterschiedlichen Vertiefungen 22a, 22b, 22c reflektiert wird.

Hierbei sind die Tiefen d, d22a, d22b, d22c, von denen hier nur die Tiefe d22c der Vertiefung 22c eingezeichnet ist, derartig bemessen, dass ein in diesen Vertiefungen reflektierter Strahl gegenüber dem an der Oberfläche 11a bzw. den verbleibenden Bereichen 22d zwischen den Vertiefungen 22a, 22b, 22c reflektierten Strahl jeweils einen Gangunterschied aufweist, der insgesamt zu einer destruktiven Interferenz führt. Somit weist z. B. die Struktur-Vertiefung 22a eine Tiefe von $\lambda/4$ auf, sodass der Reflexionsstrahl 15, der in die Vertiefung 22a gelangt und nach Reflexion wieder aus der Vertiefung 22a austritt, gegenüber dem an der Oberfläche 11a bzw. den Bereichen 22d reflektierten Strahl einen Gangunterschied von 2 x $\lambda/4 = \lambda/2$ aufweist, d. h. destruktiv mit der an den Bereich 22d reflektierten Strahlanteilen interferiert. Die weiteren Vertiefungen 22b, 22c können Tiefen mit Vielfachen von $\lambda/4$ aufweisen, wobei sie insbesondere auch in lateraler Richtung jeweils mit Bereich 22d alternieren, um eine effektive destruktive Interferenz auszubilden.

Hierbei sind unterschiedliche Interferenz-Strukturierungen 22 möglich, die diese Bedingungen erfüllen, dass die Strahlungsanteile, die in den unterschiedlichen Vertiefungen 22a, 22b, 22c und 22d reflektiert werden, die betreffenden Gangunterschiede aufweisen, bei entsprechender oder gleicher Energie bzw. Strahlungsintensität, sodass eine vollständige oder weitgehende destruktive Interferenz auftritt.

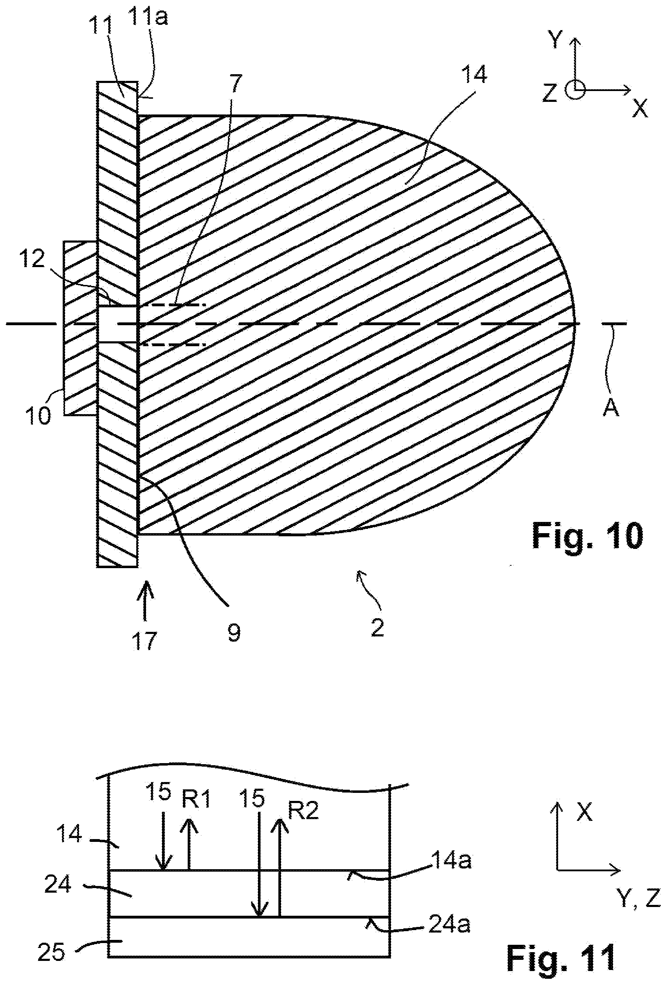

Fig. 11 zeigt eine Ausführungsform, bei der auf der Linsenoberfläche, insbesondere der Linsen-Rückseite 14a, eine Beschichtung 24 als durchgängige Schicht aufgetragen ist. Fig. 11 entspricht in der Darstellung somit im Wesentlichen der Fig. 7. An die Beschichtung 24 schließt sich ein Medium 25 an, das gemäß unterschiedlichen Ausführungsformen z.B. Luft oder auch z.B. eine Metallschicht sein kann. Hierbei sind die Materialien der Schichten 24 und 25, d.h. insbesondere die Brechungsindizes (Permittivitäten) n14, n24 und n25 der Materalen der Medien von 14, 24 und 25 sowie die Dicke d24 der Schicht 24 so gewählt, dass eine destruktive Interferenz der Teil-Reflexionsstrahlen R1 und R2 an den Grenzflächen 14a der Linse 14 und 24a der Beschichtung 24 auftritt:

Der Reflexionsstrahl 15 trifft durch die Linse 14 kommend auf die Linsen-Rückseite 14a, d.h. dem Übergang zur Beschichtung 24, wo der erste Teil-Reflexionsstrahl R1 erzeugt wird,
weiterhin tritt der Reflexionsstrahl 15 durch die Beschichtung 24 und auf die Grenzfläche 24a, d.h. dem Übergang von der Beschichtung 24 zum Medium 25, wo der zweite Teil-Reflexionsstrahl R2 erzeugt wird.

Je nach dem Verhältnis der Brechungsindizes (Permittivitäten) n14, n24 und n25

- tritt an den Grenzflächen 14a und 24a ein Phasensprung von lambda-Halbe auf, wenn der Reflexionsstrahl 15 von einem optisch dünneren Medium (kleinerer Brechungsindex bzw. kleineres n) auf ein optisch dichteres Medium (größerer Brechungsindex n) trifft,
- oder es tritt kein Phasensprung.auf, wenn der Reflexionsstrahl 15 von einem optisch dichteren Medium (größerer Brechungsindex bzw. größerer n) auf ein optisch dünneren Medium (kleinerer Brechungsindex bzw. kleineres n) trifft Hierbei wird diese Ausbildung insbesondere auf mindestens eine relevante Wellenlänge $\lambda$ bezogen, vorzugsweise auf mehrere relevante Wellenlänge $\lambda$.

Die Teil-Reflexionsstrahlen R1 und R2 bilden eine destruktive Interferenz, wenn insbesondere für die Wellenlänge $\lambda$ gilt:

A) Falls n 24 größer n 14 :
R1 weist einen Phasensprung von $\lambda/2$ auf,

- A1) falls n 25 kleiner n 24 ist, z.B. mit dem Medium 25 als Luft,

    d.h. n 25 = 1,
    so tritt R2 ohne Phasensprung auf, wobei dann vorzugsweise
    d24_ = $\lambda/2$ gewählt wird, gegebenenfalls auch d24_ = $\lambda/2 + Z^* \lambda/2$ mit Z als ganze Zahl, d.h. Z= 0, 1, 2, 3

- A2) falls n 25 größer n 24 ist, z.B. mit dem Medium 25 als Metall, z.B. einer Metallschicht, z.B. Metallbedampfung, oder auch einem dichteren Dämpfungsmedium 18 der oben in Fig. 7 gezeigten Ausführungsform, so tritt R2 mit Phasensprung auf, wobei dann vorzugsweise d24_ = $\lambda/4$ gewählt wird, gegebenenfalls auch d24_ = $\lambda/4 + Z^* \lambda/2$

mit Z als ganze Zahl, d.h. Z= 0, 1, 2, 3
B) Falls n 24 kleiner n 14 :
R1 weist keinen Phasensprung auf,

- B1) falls n 25 kleiner n 2 ist, z.B. mit dem Medium 25 als Luft,

    d.h. n 25 = 1,
    so tritt R2 ohne Phasensprung auf, wobei dann vorzugsweise
    d24_ = $\lambda/4$ gewählt wird, gegebenenfalls auch d24_ = $\lambda/4 + Z^* \lambda/2$ mit Z als ganze Zahl, d.h. Z= 0, 1, 2, 3

- B2) falls n 25 größer n 24 ist, z.B. mit dem Medium 25 als Metall, z.B. einer Metallschicht, z.B. Metallbedampfung, oder auch einem dichteren Dämpfungsmedium 18 der oben in Fig. 7 gezeigten Ausführungsform, so tritt R2 mit Phasensprung auf, wobei dann vorzugsweise d24_ = $\lambda/2$ gewählt wird, gegebenenfalls auch d24_ = $\lambda/2 + Z^* \lambda/2$

mit Z als ganze Zahl, d.h. Z= 0, 1, 2, 3

Hierbei wird vorzugsweise wiederum der zentrale Detektionsbereich 7 um die optische Achse A frei gelassen.

Das Medium 25 als Luft kann insbesondere bei Anordnung der Linse 24 vor der Platte 11 vorliegen, das Medium 25 als dichteres Medium bei z.B. der genannten Metallbeschichtung, aber auch einer anderen Beschichtung.

Hierbei lässt sich die Ausführungsform der Fig. 11 insbesondere auch gut mit der Ausführungsform der Fig. 7 kombinieren, indem das Medium 25 der Fig. 11 als Dämpfungsmaterial 18 gewählt wird.

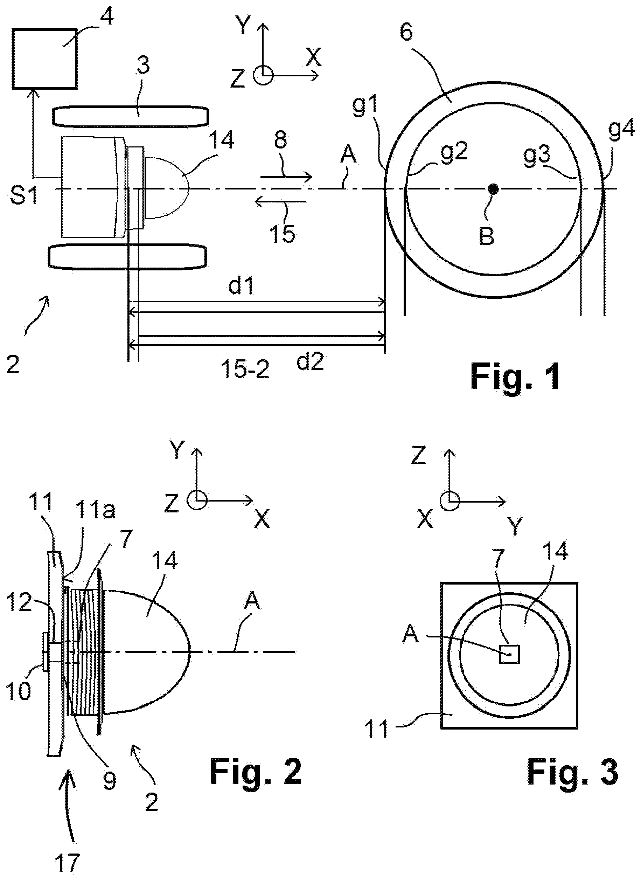

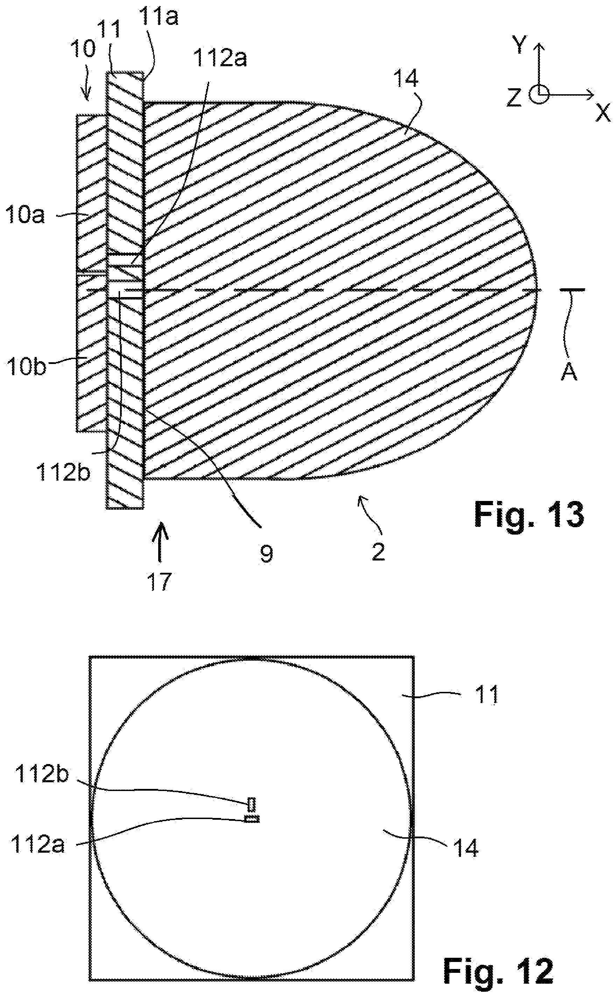

Figur 12, 13 zeigt eine weitere Ausführungsform, bei der gegenüber der Ausführungsform der Figur 2, 3 statt eines Hohlleiters 12 zwei Hohlleiter-Kanäle 112a, 112b ausgebildet sind, die durch ihre längliche Rechteckform jeweils nur eine lineare Polarisierung unterstützen. Die beiden rechteckigen Hohlleiter-Kanäle 112a, 112b sind zueinander orthogonal ausgebildet, indem sie in zueinander orthogonalen Richtungen, z. B. z und y der yz-Ebene, länglich ausgebildet sind. An die Hohlleiter-Kanäle 112a, 112b schließen sich somit nach rechts die Einkoppelpunkte an, die zusammen die Kompensationsausbildung 17 und einen Kompensationsbereich 9 bilden bzw. Teil des den Kompensationsbereichs 9 sind. Somit wird eine Einkopplung in zueinander orthogonale Richtungen erreicht.

In dieser Ausführungsform ist der THz-Transceiver 10 durch einen Transmitter 10a und einen Receiver 10b ausgebildet; der THz-Transceiver 10 kann aber grundsätzlich auch auf einem FMCW-Radar-Chip ausgebildet sein.

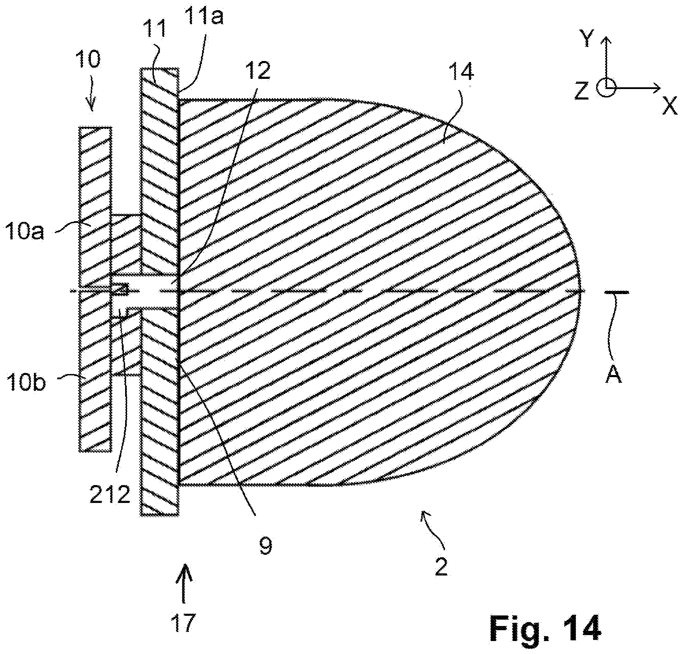

Gemäß der Ausführungsform der Fig. 14 ist als Kompensationsausbildung 17 oder Teil der Kompensationsausbildung 17 ein OMT 212, d.h. Orthomoden Transducer, bzw. Orthomoden-Koppler vorgesehen sein, der zirkular polarisierte Wellen aufteilt, bzw. orthogonal polarisierte Wellen zusammenführt. Somit bildet der OMT 212 hier in seinem rechten Bereich vorzugsweise einen quadratischen Hohlleiter 12 aus.

Bezugszeichenliste

| | |
|------|---------------------------------------------------------------------------|
| 1 | THz-Messvorrichtung |
| 2 | THz-Sensor |
| 3 | Verstelleinrichtung |
| 4 | Steuereinrichtung |
| 5 | Messraum |
| 6 | Messobjekt, z. B. Kunststoff-Rohr |
| 7 | zentraler Detektionsbereich |
| 8 | THz-Sendestrahl |
| 9 | Kompensationsbereich zwischen Linse 14 und Trägereinrichtung 11 |
| 10 | THz-Transceiver, z.B. Sensor-Chip |
| 10a | THz-Transmitter oder THz-Transceiver |
| 10b | THz-Receiver |
| 11 | Trägereinrichtung, z.B. Trägerplatte, Sensorträger |
| 11a | Platten-Vorderseite, insbesondere Reflexionsebene |
| 12 | Hohlleiter |
| 14 | Linse |
| 14a | Linsen-Rückseite |
| 15 | Reflexionsstrahl |
| 15-2 | zweifach reflektierter Strahl |
| 16 | Transpolarisations-Struktur |
| 16a | Struktur- Erhöhung |
| 16b | Struktur -Vertiefung |
| b16 | Struktur-Breite |
| h16 | Profilhöhe |
| $\alpha16$ | Struktur-Winkel |
| 17 | Kompensations-Ausbildung |
| 18 | Dämpfungsmedium |
| 19 | Zwischenraum |
| 20 | Abschrägung |
| 21 | Anschlussbereich |
| 22 | Interferenz-Struktur |
| 22a, 22b, 22c | Struktur-Vertiefung der Interferenz-Struktur 22 |
| 22d | verbleibender Bereich, Struktur-Vertiefung = 0 der Interferenz-Struktur |
| 24 | Beschichtung |
| 24a | Grenzfläche der Beschichtung 24 als Übergang von der Beschichtung 24 zum Medium 25 |
| 25 | Medium, z.B. Luft, Metall |
| 112a, 112b | orthogonal zueinander stehende, längliche Hohlleiter- Kanäle zum Leiten genau einer Polarisationsrichtung |
| 212 | Orthomoden Transducer (OMT)-Struktur |

| A | optische Achse des THz-Sensors 2 |
|---|---|
| B | Symmetrieachse der THz-Messvorrichtung 1, insbesondere auch Rohrachse |
| c6 | Lichtgeschwindigkeit im Material des Messobjektes 6 |
| c0 | Lichtgeschwindigkeit im Vakuum, Luft |
| d1 | Abstand der Grenzfläche g1 zum THz-Sensor 2 |
| d2 | Abstand der Vorderseite 11a zur Grenzfläche g1 |
| $\varepsilon_r$ | Permittivität |
| $\varepsilon'_r$ | Realanteil, Brechungsindex |
| $\varepsilon''_r$ | Dämpfung, Dämpfungswert |
| $\varepsilon_r$, Medium | Dielektrizität der Medien, mit Medium = 6, 14, 18 |
| g1, g2, g3, g4 | Grenzflächen des Messobjektes 6 |
| P0 | Nutz-Reflexionspeak |
| P1 | zweifacher Reflexionspeak |
| P2, P3, P4 | höhere mehrfache Reflexionspeaks |

## Patentansprüche

1. THz-Sensor (2) zum Vermessen eines Messobjektes (6), insbesondere Rohres, wobei der THz-Sensor (2) aufweist:

   einen THz-Transceiver (10) zum Ausgeben und Aufnehmen von THz-Strahlung,
   eine Linse (14) zum Bündeln der von dem THz-Transceiver (10) ausgegebenen THz-Strahlung und Ausgeben eines THz-Sendestrahls (8) entlang einer optischen Achse (A) und zum Aufnehmen eines THz- Reflexionsstrahls (15),
   eine Trägereinrichtung (11), an der die Linse (14) und/oder der THz-Transceiver (10) aufgenommen oder befestigt ist,
   **wobei**
   in einem Kompensationsbereich (9) zwischen der Linse (14) und der Trägereinrichtung (11) eine THz-Strahlung beeinflussende Kompensations-Ausbildung (17) zur Veränderung und/oder Verringerung einfallender THz-Strahlung vorgesehen ist und die Kompensations-Ausbildung (17) dazu eingerichtet ist die THz-Strahlung so zu beeinflussen, dass eine Reflexion des Reflexionsstrahls (15) an dem THz-Sensor (2) derartig verändert wird, dass Mehrfach-Reflexionen zumindest verringert werden,
   **dadurch gekennzeichnet, dass**
   der THz-Sensor (2) ausgebildet ist, den THz-Sendestrahl (8) polarisiert auszugeben und lediglich einen polarisierten Reflexionsstrahl (15) zu detektieren.

2. THz-Sensor (2) nach Anspruch 1, **dadurch gekennzeichnet, dass**

   er weiterhin einen Hohlleiter (12) aufweist, der zwischen der Linse (14) und dem THz-Transceiver (10) vorgesehen und zur Leitung ausgegebener und einfallender THz-Strahlung ausgebildet ist,
   wobei der Kompensationsbereich (9) außerhalb eines vor dem Hohlleiter (12) ausgebildeten zentralen Detektionsbereichs (7) und/oder um den Detektionsbereich (7) herum ausgebildet ist.

3. THz-Sensor (2) nach Anspruch 2, **dadurch gekennzeichnet, dass** der Kompensationsbereich (9) in einem sich unmittelbar an den Detektionsbereich (7) in einer zur optischen Achse (A) senkrechten oder lateralen Ebene (YZ) anschließenden, insbesondere ringförmigen, Anschlussbereich (21) ausgebildet ist.

4. THz-Sensor (2) nach Anspruch 2 oder 3, **dadurch gekennzeichnet, dass** der Hohlleiter (12) polarisierend ausgebildet ist und/oder ein Polarisationsfilter zum Polarisieren vorgesehen ist.

5. THz-Sensor (2) nach einem der vorherigen Ansprüche, **dadurch gekennzeichnet, dass** der Kompensationsbereich (9) einen oder mehrere der folgenden Elemente oder Teile umfasst:

   - einen hinteren Teil der Linse (14), insbesondere eine Rückseite (14a) der Linse (14),
   - die Trägereinrichtung (11), insbesondere eine Vorderseite (11a) der Trägereinrichtung (11),
   - einen Zwischenraum (19) zwischen der Rückseite (14a) der Linse (14) und der Trägereinrichtung (11),

6. THz-Sensor (2) nach einem der vorherigen Ansprüche, **dadurch gekennzeichnet, dass** der Kompensationsbereich (9) derartig ausgebildet ist, dass er THz-Strahlung, insbesondere einen von der Linse (14) zu der Trägereinrichtung (11) einfallenden Reflexionsstrahl (15), in einer oder mehreren der folgenden Weisen beeinflusst:

    a) Drehung einer Polarisationsebene (XY),
    b) Dämpfung der THz-Strahlung (15),
    c) Ablenken oder Reflektieren des einfallenden Reflexionsstrahl (15 zumindest teilweise in einer zur optischen Achse (A) lateralen oder senkrechten Richtung (Y, Z),
    d) Ausbilden einer destruktiven Interferenz, insbesondere durch Reflexion des einfallenden Reflexionsstrahls (15) in zueinander versetzten Reflexionsflächen (22a, 22b, 22c) einer Interferenz-Struktur (22)
    e) Ausbilden einer destruktiven Interferenz durch eine Beschichtung auf der Linsenoberfläche, insbesondere Linsenrückseite (14a), mit optischen Übergängen von der Linse (14) zu der Beschichtung (24) und von der Beschichtung (24) zu einem weiteren Medium (25), wobei die Linse (14), die Beschichtung (24) und das weitere Medium (25) unterschiedliche Brechungsindices und/oder unterschiedliche Permittivitäten aufweisen, insbesondere durch Reflexion des einfallenden Reflexionsstrahls (15) an den Grenzflächen der Linsenoberfläche (14a) zu der Beschichtung (24) und von der Beschichtung (24) zu dem Medium,

z.B. mit dem Medium (25) als Luft oder Metall, z.B. Metallschicht auf der Beschichtung (24).

7. THz-Sensor (2) nach einem der vorherigen Ansprüche, **dadurch gekennzeichnet, dass** der THz-Transceiver (10) ausgebildet ist für eine Ausgabe und Messung

mittels Laufzeitmessung und/oder mittels frequenzmodulierter Strahlung und/oder zur Ausgabe und Detektion gepulster Strahlung,
insbesondere in einem Frequenzbereich von 10 GHz bis 10 THz, vorzugsweise 50 GHz bis 4 THz, z. B 50 GHz bis 3 THz.

8. THz-Sensor (2) nach einem der vorherigen Ansprüche, **dadurch gekennzeichnet, dass**
die Kompensations-Ausbildung (17) ausgebildet ist, den einfallenden Reflexionsstrahl (15) unter Drehung seiner Polarisationsebene (XY) um einen Drehwinkel, insbesondere um 90°, zu reflektieren.

9. THz-Sensor (2) nach einem der vorherigen Ansprüche, **dadurch gekennzeichnet, dass** die Kompensations-Ausbildung (17) eine Transpolarisations-Struktur (16) aufweist, die sich in der zur optischen Achse (A) senkrechten Ebene (Y, Z) in einer Strukturrichtung erstreckt, die unter einem Transpolarisations-Winkel ($\alpha16$), insbesondere 45°, gegenüber der Polarisationsrichtung (Y) verläuft, zur Drehung der Polarisationsrichtung (Y) bei Reflexion in eine zur Polarisationsrichtung senkrechten Richtung (Z).

10. THz-Sensor (2) nach Anspruch 9, **dadurch gekennzeichnet, dass** die Transpolarisations-Struktur (16) eine oder mehrere der folgenden Eigenschaften aufweist:

    - in der Strukturrichtung verlaufende Profilierungen, z. B. Struktur-Erhöhungen (16a) und zwischen den Struktur-Erhöhungen (16a) ausgebildete Struktur-Vertiefungen (16b), z. B. als Rechteck-Profilierung,
    - eine Struktur-Breite (b16), die kleiner als eine relevante Wellenlänge ($\lambda$) der THz-Strahlung (8, 15) ist, z. B. im Bereich zwischen einem Zehntel und der halben relevanten Wellenlänge ($\lambda$), z.B. mit der kürzesten Wellenlänge des eingesetzten THz-Wellenlängenbereichs als relevante Wellenlänge (A),
    - eine Strukturhöhe (h16), z.B. Profilhöhe (h16), die z.B. gleich ein Viertel der relevanten Wellenlänge ($\lambda/4$) ist, z.B. mit einer mittleren Wellenlänge ($\lambda$) des eingesetzten THz-Wellenlängenbereichs als relevante Wellenlänge, z.B. mit $h16 = \lambda/4 + n * \lambda/2$,
    mit $\lambda$ als relevante Wellenlänge, h16 als Strukturhöhe, z.B. Profilhöhe, n als ganzzahliges Vielfaches, einschließlich Null,
    insbesondere mit der kürzesten Wellenlänge der ausgesandten THz-Strahlung als relevante Wellenlänge.

11. THz-Sensor (2) nach einem der vorherigen Ansprüche, **dadurch gekennzeichnet, dass** in dem Kompensationsbereich (9), hinter und/oder in der Linse (14), zwei getrennte Hohlleiter- Kanäle (112a, 112b) ausgebildet sind, die aufgrund ihrer Formgebungen, insbesondere als längliche Rechtecke, jeweils genau eine lineare Polarisationsrichtung (Y, Z) durchlassen, wobei die beiden Polarisationsrichtungen (Y, Z) der beiden Hohlleiter- Kanäle (112a, 112b) orthogonal zueinander stehen.

12. THz-Sensor (2) nach einem der vorherigen Ansprüche, **dadurch gekennzeichnet, dass** in dem Kompensationsbereich (9) ein Orthomoden-Koppler (212) vorgesehen ist, der den THz-Sendestrahl (8) in zwei entgegengesetzt zirkular polarisierte Wellen aufteilt und/oder orthogonal polarisierte Wellen zusammenführt.

13. THz-Sensor (2) nach einem der vorherigen Ansprüche, **dadurch gekennzeichnet, dass** in einem Zwischenraum (19) zwischen der Rückseite (14a) der Linse (14) und einer metallischen Trägerplatten-Vorderseite (11a), ein Dämpfungsmedium (18) vorgesehen ist,
wobei das Dämpfungsmedium (18) THz-Strahlung (15) in einem Wellenlängenbereich um eine mittlere Wellenlänge ($\lambda$) dämpft.

14. THz-Sensor (2) nach Anspruch 13, **dadurch gekennzeichnet, dass** das Dämpfungsmedium (18) eine komplexe relative Permittivität $\varepsilon_r$ aufweist, die durch einen Realteil $\varepsilon'_r$ und einen Imaginärteil $\varepsilon''_r$ als

$$\varepsilon_r = \varepsilon'_r + i\,\varepsilon''_r \text{ (Gleichung 1)}$$

beschrieben ist,
wobei der Imaginärteil $\varepsilon''_r$ einen Dämpfungswert des Dämpfungsmediums (18) beschreibt, und
ein Brechungsindex (n18) des Dämpfungsmediums (18) einem Brechungsindex (n14) der Linse (14) entspricht, zur Vermeidung von Reflexionen zwischen Linsen-Rückseite (14a) und dem Dämpfungsmedium (18).

15. THz-Sensor (2) nach einem der vorherigen Ansprüche, **dadurch gekennzeichnet, dass** eine Vorderseite (11a) der Trägereinrichtung (11) in dem Kompensationsbereich (9), insbesondere in dem Anschlussbereich (21) um einen mittleren Detektionsbereich (17) herum, eine Abschrägung (20) aufweist, insbesondere nach hinten abfallend, zum Ablenken des entlang der optischen Achse (A) in den Zwischenraum (9) einfallenden Reflexionsstrahls (15) zumindest teilweise in einer zur optischen Achse (A) senkrechten Richtung , z. B. lateral nach außen.

16. THz-Sensor (2) nach einem der vorherigen Ansprüche, **dadurch gekennzeichnet, dass** in der Reflexionsebene (13) eine Interferenz-Struktur (22) ausgebildet ist, zur Reflexion des in den Zwischenraum (9) einfallenden Reflexionsstrahls (15) unter Ausbildung einer destruktiven Interferenz, mit mehreren Struktur-Vertiefungen (22a, 22b, 22c) zur Ausbildung von Reflexionen mit Gangunterschieden, die geeigneten anteiligen Werten einer relevanten oder mehrerer relevanter Wellenlängen ($\lambda$) eines Wellenlängenbereichs der ausgesandten THz-Strahlung betragen, z.B. mit Struktur-Vertiefungen bzw. Struktur-Erhöhungen, z.B. Profilhöhen, die einem Viertel der relevanten Wellenlänge plus einen ganzzahligen Vielfachen der halben relevanten Wellenläge entsprechen.

17. THz-Sensor (2) nach einem der vorherigen Ansprüche, **dadurch gekennzeichnet, dass** die Linse (14) eine gewölbte, z. B. ovale Vorderseite und eine plane und/oder strukturierte Linsen-Rückseite (14a) aufweist, mit der die Linse (14) direkt oder indirekt an der Trägereinrichtung (11) angebracht ist.

18. THz-Messvorrichtung (1) zur Vermessung eines Messobjektes (6), insbesondere eines Rohres aus Kunststoff, Gummi oder einem organischen Material,
wobei die THz-Messvorrichtung (1) aufweist

- mindestens einen THz-Sensor (2) nach einem der vorherigen Ansprüche zur Ausgabe eines THz-Sendestrahls (8) und Aufnahme eines THz-Reflexionsstrahls (15),
- eine Steuereinrichtung (4), die ausgebildet ist zur Aufnahme eines Messsignals (S1) des THz-Transceivers (10) und zur Ermittlung von Abständen und / oder Schichtdicken eines Messobjektes (6)
- einen Messraum (5) zur Aufnahme des Messobjektes (6).

19. THz-Messvorrichtung (1) nach Anspruch 18, **dadurch gekennzeichnet, dass** sie ein Gehäuse (30) aufweist, das einen Messraum (5) zur Aufnahme des Messobjektes (6) umgibt, wobei der THz-Sensor (2) an dem Gehäuse (30) vorgesehen ist, insbesondere mit mehreren THz-Sensoren (2) und / oder rotatorischer Anordnung des THz-Sensors (2) an dem Gehäuse (30) zum Rotieren oder Umlaufen um den Messraum (5) zur vollumfänglichen Vermessung des Messobjektes (6).

20. THz-Messverfahren zum Messen von Abständen und/oder Schichtdicken eines Messobjektes (6), z. B. eines Rohres aus Kunststoff, Gummi oder einem organischen Material, mittels eines THz-Sensors (2),

wobei der THz-Sensor (2) einen THz-Transceiver, eine Linse (14) zum Bündeln einer von dem THz-Transceiver (10) ausgegebenen THz-Strahlung und Ausgeben eines THz-Sendestrahls (8) entlang einer optischen Achse (A) und zum Aufnehmen eines THz- Reflexionsstrahls (15) und einen Kompensationsbereich (9) zwischen der Linse und einer Trägereinrichtung (11), an der die Linse (14) und/oder der THz-Transceiver (10) aufgenommen oder befestigt ist,

aufweist,

bei dem der THz-Sendestrahl (8) von dem THz-Transceiver (10) des THz-Sensors (2) entlang der optischen Achse (A) durch einen Messraum (5) auf das Messobjekt (6) ausgesandt wird,

von Grenzflächen (g1, g2, g3, g4) des Messobjektes (6) der THz- Reflexionsstrahl (15) entlang der optischen Achse (A) zurückreflektiert wird, wobei der THz- Reflexionsstrahl (15) in einem zentral um die optische Achse (A) ausgebildeten Detektionsbereich (17) von dem THz- Transceiver (10) detektiert und ein Messsignal (S1) mit mindestens einem Nutz-Reflexions-Peak (P0) erzeugt wird und aus dem Messsignal (S1) durch Auswerten mindestens ein Abstand (dg1, dg2, dg3, dg4) und/oder eine Schichtdicke und/oder ein Brechungsindex des Messobjektes (6) ermittelt wird,

wobei der Reflexionsstrahl (15) in dem Kompensationsbereich (9) um den Detektionsbereich (17) herum derartig beeinflusst wird,

dass durch erneute Reflexion des Reflexionsstrahl (15) an dem THz-Sensor (2) zurück zu dem Messobjekt (6) geleitete und nach Reflexion an dem Messobjekt (6) durch Detektion in dem THz-Transceiver (10) erzeugte Mehrfach-Reflexionsanteile (P1, P2, ...) in dem Messsignal (S1) zumindest verringert werden,

wobei der THz-Sensor (2) den THz-Sendestrahl polarisiert ausgibt und lediglich einen polarisierten Reflexionsstrahl (15) detektiert.

21. THz-Messverfahren nach Anspruch 20, **dadurch gekennzeichnet, dass** der THz- Reflexionsstrahl (15) in dem Kompensationsbereich (9), insbesondere einem sich in lateralen (YZ) Richtungen an den Detektionsbereich (17) anschließenden Anschlussbereich (21),

auf eine oder mehrere der folgenden Weisen beeinflusst wird:

a) Drehung der Polarisationsrichtung, insbesondere um 90° mittels einer Transpolarisations-Struktur,
b) Dämpfung des Reflexionsstrahls (15) in dem Zwischenraum (9), z. B. durch ein Dämpfungsmedium (18),
c) Wegreflektieren des Reflexionsstrahls (15) in einer lateralen Richtung, insbesondere weg von der optischen Achse (A),
d) Ausbilden einer destruktiven Interferenz des erneut reflektierten Reflexionsstrahls (15), insbesondere durch eine Interferenz-Struktur (22) mit einer Strukturierung in Abhängigkeit einer relevanten Wellenlänge, z. B. einem Viertel der mittleren Wellenlänge ($\lambda/4$).

## Claims

1. THz sensor (2) for measuring an object to be measured (6), in particular, a pipe, the THz sensor (2) comprising:

   a THz transceiver (10) for emitting and receiving THz radiation,
   a lens (14) for bundling the THz radiation emitted by the THz transceiver (10) and emitting a THz transmission beam (8) along the optical axis (A) and for receiving a THz reflection beam (15),
   a support device (11), on which the lens (14) and/or the THz transceiver (10) is accommodated or fastened, wherein
   a THz radiation-influencing compensation formation (17) for modifying and/or reducing incident THz radiation is provided in a compensation area (9) between the lens (14) and the support device (11), and the compensation formation (17) is adapted to influence the THz radiation such that a reflection of the reflection beam (15) at the THz sensor (2) is altered in such a way that multiple reflections are at least reduced,
   **characterized in that**
   the THz sensor (2) is designed to emit the THz transmission beam (8) in a polarised manner and to detect only a polarised reflection beam (15).

2. THz sensor (2) according to claim 1, **characterized in that** it further comprises a waveguide (12) provided between the lens (14) and the THz transceiver (10) and adapted to conduct emitted or incident THz radiation, the compensation area (9) being formed outside a central detection area (7) formed in front of the waveguide (12) and/or around the detection area (7).

3. THz sensor (2) according to claim 2, **characterized in that** the compensation area (9) is formed in a, in particular, ring-shaped, connecting area (21) directly joining the detection area (7) in a plane perpendicular or lateral to the optical axis (A).

4. THz sensor (2) according to claim 2 or 3, **characterized in that** the waveguide (12) is designed in a polarising manner and/or a polarisation filter is provided for polarising.

5. THz sensor (2) according to one of the above claims, **characterized in that** the compensation area (9) includes one or more of the following elements or parts:

    - a rear part of the lens (14), in particular, a rear side (14a) of the lens (14),
    - the support device (11), in particular, a front face (11a) of the support device (11),
    - a gap (19) between the rear side (14a) of the lens (14) and the support device (11),

6. THz sensor (2) according to one of the above claims, **characterized in that** the compensation area (9) is designed such that it influences THz radiation, in particular, a reflected beam (15) travelling from the lens (14) to the support device (11), in one or more of the following manners:

    a) rotating a polarization plane (XY),
    b) attenuating the THz radiation (15),
    c) deflecting or reflecting the incident reflected beam (15 at least in part in a lateral or perpendicular direction (Y, Z) in relation to the optical axis (A),
    d) forming a destructive interference, in particular, by reflection of the incident reflected beam (15) in reflection surfaces (22a, 22b, 22c) of an interference structure (22) offset against one another,
    e) forming a destructive interference by means of a coating on the lens surface, in particular, rear side of the lens (14a), with optical transitions from the lens (14) to the coating (24) and from the coating (24) to a further medium (25), the lens (14), the coating (24) and the further medium (25) having different refractive indexes and/or different permittivity, in particular, by reflection of the incident reflected beam (15) on the boundary surfaces of the lens surface (14a) to the coating (24) and from the coating (24) to the medium,

e.g., the medium (25) being air or metal, e.g., metal layer on the coating (24).

7. THz sensor (2) according to one of the above claims, **characterized in that** the THz transceiver (10) is adapted for output and measurement using time-of-flight measurement and/or using frequency modulated radiation and/or for output and detection of pulsed radiation,
in particular, in a frequency range between 10 GHz and 10 THz, preferably 50 GHz and 4 THz, e.g., 50 GHz and 3 THz.

8. THz sensor (2) according to claim 7, **characterized in that** the compensation formation (17) is adapted to reflect the incident reflected beam (15) with a rotation of its polarization plane (XY) about an angle of rotation, in particular, about 90°.

9. THz sensor (2) according to one of the above claims, **characterized in that** the compensation formation (17) comprises a transpolarization (transverse polarization) structure (16) extending in the plane (Y, Z) perpendicular to the optical axis (A) in a structure direction extending at a transpolarization angle ($\alpha$16), in particular, 45°, in relation to the polarization direction (Y), for rotating the polarization direction (Y) upon reflection in a direction (Z) perpendicular to the polarization direction.

10. THz sensor (2) according to claim 9, **characterized in that** the transpolarization structure (16) exhibits one or more of the following characteristics:

    - profilings extending in the structure direction, e.g., structure elevations (16a) and structure recesses (16b) formed between the structure elevations (16a), e.g., as rectangular profiling,
    - a structure width (b16) that is smaller than a relevant wavelength ($\lambda$) of the THz radiation (8, 15), e.g., in a range between one tenth and one half of the relevant wavelength ($\lambda$), e.g., with the shortest wavelength of the used THz wavelength band as relevant wavelength ($\lambda$),
    - a structure height (h16), e.g., profile height (h16), which is, e.g., equal to one quarter of the relevant wavelength ($\lambda$/4), e.g., at an average wavelength ($\lambda$) of the used THz wavelength band as relevant wavelength, e.g., where h16 = $\lambda$/4 +n * $\lambda$/2,
    with $\lambda$ as relevant wavelength, h16 as structure height, e.g., profile height, n as integer multiple, including zero,

in particular, with the shortest wavelength of the emitted THz radiation as relevant wavelength.

11. THz sensor (2) according to one of the above claims, **characterized in that** in the compensation area (9), behind and/or inside the lens (14), two separate waveguide channels (112a, 112b) are formed which pass, owing to their shapes, in particular, as elongated rectangles, each only exactly one linear polarization direction (Y, Z), where the two polarization directions (Y, Z) of the two waveguide channels (112a, 112b) are orthogonal in relation to one another.

12. THz sensor (2) according to one of the above claims, **characterized in that** an Orthomode coupler (212) is provided in the compensation area (9) which splits the THz transmission beam (8) in two opposingly circularly polarized waves and/or joins orthogonally polarized waves.

13. THz sensor (2) according to one of the above claims, **characterized in that** an attenuating medium (18) is provided in a gap (19) between the rear side (14a) of the lens (14) and a metal front side (11a) of the support plate,
the attenuating medium (18) THz radiation (15) attenuating in a wavelength range about an average wavelength ($\lambda$).

14. THz sensor (2) according to claim 13, **characterized in that** the attenuating medium (18) exhibits a complex relative permittivity $\varepsilon_r$ which is described by a real part $\varepsilon'_r$ and an imaginary part $\varepsilon''_r$ as

$$\varepsilon_r = \varepsilon'_r + i\, \varepsilon''_r \text{ (equation 1)},$$

where the imaginary part $\varepsilon''_r$ describes an attenuation value of the attenuating medium (18), and
a refractive index (n18) of the attenuating medium (18) corresponds to a refractive index (n14) of the lens (14), so as to avoid reflections between the lens rear side (14a) and the attenuating medium (18).

15. THz sensor (2) according to one of the above claims, **characterized in that** a front face (11a) of the support device (11) exhibits a taper (2) in the compensation area (9), in particular, in the connecting area (21) around an average detection area (17), the taper, in particular, sloping towards the rear, to deflect the reflection beam (15) incoming along the optical axis (A) into the gap (9) at least in part in a direction perpendicular to the optical axis (A), e.g., laterally outwards.

16. THz sensor (2) according to one of the above claims, **characterized in that** an interference structure (22) is formed in the reflection plane (13), to reflect the reflection beam (15) incoming into the gap (9) while creating a destructive interference,

including a plurality of structure recesses (22a, 22b, 22c) for creating reflections of different path lengths which equal suitable values of a relevant or several relevant wavelengths ($\lambda$) of a wavelength range of the emitted THz radiation,
e.g., including structure recesses or structure elevations respectively, e.g., profile heights corresponding to one quarter of the relevant wavelength plus a multiple integer of on half of the relevant wavelength.

17. THz sensor (2) according to one of the above claims, **characterized in that** the lens (14) has an arched, e.g., oval front face and a planar and/or structured lens rear side (14a) by means of which the lens (14) is directly or indirectly attached to the support device (11).

18. THz measuring device (1) for measuring an object to be measured (6), in particular, a pipe made of plastics, rubber or an organic material,
the THz measuring device (1) comprising

- at least one THz sensor (2) according to one of the above claims for emitting a THz transmission beam (8) and receiving a THz reflection beam (15),
- a controller device (4) adapted to receive a measuring signal (S1) of the THz transceiver (10) and to determine distances and/or layer thicknesses of an object to be measured (6)
- a measuring space (5) for accommodating the object to be measured (6).

19. THz measuring device (1) according to claim 18, **characterized in that** it comprises a housing (30)

surrounding a measuring space (5) for accommodating the object to be measured (6),
the THz sensor (2) being provided on the housing (30),

in particular, including a plurality pf THz sensors (2) and/or rotational arrangement of the THz sensor (2) on the housing (30) for rotating or revolving around the measuring space (5) so as to measure the entire circumference of the object to be measured (6).

20. THz measuring method for measuring distances and/or layer thicknesses of an object to be measured (6), e.g., a pipe made of plastics, rubber or an organic material, using a THz sensor (2),

the THz sensor (2) comprising a THz transceiver, a lens (14) for bundling a THz radiation emitted from the THz transceiver (10) and emitting a THz transmission beam (8) along an optical axis (A) and for receiving a THz reflection beam (15) and a compensation are (9) between the lens and a support device (11) on which the lens (14) and/or the THz transceiver (10) is accommodated or fastened,
wherein
the THz transmission beam (8) is emitted from the THz transceiver (10) of the THz sensor (2) along the optical axis (A) through a measuring space (5) onto the object to be measured (6),
the THz reflection beam (15) is reflected back from boundary surfaces (g1, g2, g3, g4) of the object to be measured (6) along the optical axis (A), where the THz reflection beam (15) is detected by the THz transceiver (10) in a detection area (17) formed centrally around the optical axis (A), and a measuring signal (S1) including at least one wanted reflection peak (P0) is generated, and at least one distance (dg1, dg2, dg3, dg4) and/or one layer thickness and/or one refractive index of the object to be measured (6) is determined from the measuring signal (S1) by evaluation, where the reflection beam (15) is influenced in the compensation area (9) around the detection area (17) in such a manner that multiple reflection components (P1, P2, ...), guided back to the object to be measured (6) by new reflection of the reflected beam (15) at the THz sensor (2) and created after reflection at the object to be measured (6) are at least reduced in the measuring signal (S1) by means of detection in the THz transceiver (10),
where the THz sensor (2) emits the THz transmission beam in a polarised manner and only detects a polarised reflection beam (15).

21. THz measuring method according to claim 20, **characterized in that** the THz reflection beam (15), in the compensation area (9),

in particular, in a connecting area (21) joining the detection area (17) in lateral (YZ) directions,
is influenced in one or more of the following manners:

a) rotating the polarization plane, in particular, about 90°, using a transpolarization structure ,
b) attenuating the reflected beam (15) in the gap (9), e.g., by means of an attenuating medium (18),
c) deflecting the reflected beam (15) away in a lateral direction, in particular, away from the optical axis (A),
d) forming a destructive interference of the re-reflected reflected beam (15), in particular, by means of an interference structure (22) having a structuring depending on a relevant wavelength, e.g., one quarter of the average wavelength ($\lambda$/4).

## Revendications

1. Capteur THz (2) pour mesurer un objet de mesure (6), le capteur THz (2) comportant :

un émetteur-récepteur THz (10) pour émettre et recevoir du rayonnement THz,
une lentille (14) pour focaliser le rayonnement THz émis par l'émetteur-récepteur THz (10) et émettre un rayonnement d'émission THz (8) le long d'un axe optique (A) et pour enregistrer un faisceau THz réfléchi (15),
un dispositif support (11) qui accueille ou auquel est fixée la lentille (14) et/ou l'émetteur-récepteur THz (10),
**où**
dans une zone de compensation (9) entre la lentille (14) et le dispositif support (11) est prévu un dispositif de compensation (17) qui influence le rayonnement THz pour modifier et/ou réduire le rayonnement THz incident, et le dispositif de compensation (17) est conçu pour influencer le rayonnement THz de façon qu'une réflexion du faisceau réfléchi (15) soit modifiée sur le capteur THz (2) de sorte que les réflexions multiples soient au moins réduites,
**caractérisé en ce que**
le capteur THz (2) est conçu pour émettre le faisceau d'émission THz (8) polarisé et pour détecter uniquement un faisceau réfléchi (15) polarisé.

2. Capteur THz (2) selon la revendication 1, **caractérisé en ce qu'**il comporte en outre un semiconducteur (12) prévu entre la lentille (14) et l'émetteur-récepteur THz (10) et conçu pour conduire le rayonnement THz émis et incident, où la zone de compensation (9) est constituée hors de la zone de détection centrale (7) conçue devant le semiconducteur (12) et/ou autour de la zone de détection (7).

3. Capteur THz (2) selon la revendication 2, **caractérisé en ce que** la zone de compensation (9) est conçue dans une zone de raccordement (21) qui se raccorde directement à la zone de détection (7) dans un plan (YZ) perpendiculaire ou latéral à l'axe optique (A), en particulier circulaire.

4. Capteur THz (2) selon la revendication 2 ou 3, **caractérisé en ce que** le semiconducteur (12) est conçu polarisant et/ou est muni d'un filtre de polarisation pour polariser.

5. Capteur THz (2) selon l'une des revendications précédentes,
   **caractérisé en ce que** la zone de compensation (9) comprend au moins un des éléments ou pièces suivants :

   - une partie arrière de la lentille (14), en particulier une face arrière (14a) de la lentille (14),
   - un dispositif support (11), en particulier une face avant (11a) du dispositif support (11),
   - un espace intermédiaire (19) entre la face avant (14a) de la lentille (14) et le dispositif support (11).

6. Capteur THz (2) selon l'une des revendications précédentes,
   **caractérisé en ce que** la zone de compensation (9) est conçue de sorte qu'elle influence le rayonnement THz, en particulier un faisceau réfléchi (15) en provenance de la lentille (14) vers le dispositif support (11) d'au moins une des façons suivantes :

   a) Rotation d'un plan de polarisation (XY),
   b) Atténuation du rayonnement THz (15),
   c) Diffraction ou réflexion du faisceau réfléchi incident (15) au moins partiellement dans une direction (Y, Z) latérale ou perpendiculaire à l'axe optique (A),
   d) Formation d'une interférence destructive, en particulier par réflexion du faisceau réfléchi incident (15) dans des surfaces de réflexion (22a, 22b, 22c) décalées les unes par rapport aux autres d'une structure d'interférence (22),
   e) Formation d'une interférence destructive par un revêtement sur la surface de la lentille, en particulier la face arrière de la lentille (14a), avec transitions optiques de la lentille (14) au revêtement (24) et du revêtement (24) à un autre milieu (25), la lentille (14), le revêtement (24) et l'autre milieu (25) présentant différents indices de réfraction et/ou différentes permittivités, en particulier par réflexion du faisceau réfléchi incident (15) sur les dioptres entre la surface de la lentille (14a) et le revêtement (24) et entre le revêtement (24) et le milieu, p. ex. avec le milieu (25) en tant qu'air ou métal, p. ex. une couche métallique sur le revêtement (24).

7. Capteur THz (2) selon l'une des revendications précédentes, **caractérisé en ce que** l'émetteur-récepteur THz (10) est conçu pour une émission et une mesure par mesure de temps de vol et/ou par rayonnement à modulation de fréquence et/ou pour l'émission et la détection de rayonnement pulsé,
   en particulier dans une gamme de fréquences de 10 GHz à 10 THz, de préférence de 50 GHz à 4 THz, p. ex. de 50 GHz à 3 THz.

8. Capteur THz (2) selon l'une des revendications précédentes, **caractérisé en ce que** le dispositif de compensation (17) est conçu pour réfléchir le faisceau réfléchi incident (15) en faisant tourner son plan de polarisation (XY) d'un angle de rotation, en particulier de 90°.

9. Capteur THz (2) selon l'une des revendications précédentes, **caractérisé en ce que** le dispositif de compensation (17) comporte une structure de transpolarisation (16) qui s'étend dans le plan (Y, Z) perpendiculaire à l'axe optique (A) dans une direction structurelle sous un angle de transpolarisation ($\alpha$16), en particulier 45°, par rapport à la direction de polarisation (Y), pour faire tourner la direction de polarisation (Y) lors d'une réflexion dans une direction perpendiculaire à la direction de polarisation (Z).

10. Capteur THz (2) selon la revendication 9, **caractérisé en ce que** la structure de transpolarisation (16) présente au moins une des propriétés suivantes :

    - des profilages s'étendant dans la direction de structure, p. ex. des saillies (16a) et des creux (16b) formés entre les saillies (16a), p. ex. sous forme de profilages rectangulaires,

- une largeur de structure (b16), qui est plus petite qu'une longueur d'onde pertinente (λ) du rayonnement THz (8, 15), p. ex. dans la gamme entre un dixième et la moitié de la longueur d'onde pertinente (λ), p. ex. avec la plus courte longueur d'onde de la gamme de longueurs d'onde THz utilisée comme longueur d'onde pertinente (λ),
- une hauteur de structure (h16), p. ex. une hauteur de profil (h16), p. ex. égale à un quart de la longueur d'onde pertinente (λ/4), p. ex. avec une longueur d'onde moyenne (λ) de la gamme de longueurs d'onde THz utilisée comme longueur d'onde pertinente, p. ex. avec h16 = λ/4 + n * λ/2,

avec λ comme longueur d'onde pertinente, h16 comme hauteur de structure, p. ex. hauteur de profil, n comme multiple entier, y compris zéro,

en particulier avec la plus courte longueur d'onde du rayonnement THz émis comme longueur d'onde pertinente.

11. Capteur THz (2) selon l'une des revendications précédentes, **caractérisé en ce que** dans la zone de compensation (9), derrière et/ou dans la lentille (14), sont constitués deux canaux semiconducteurs séparés (112a, 112b) qui laissent passer exactement une direction de polarisation respective (Y, Z) du fait de sa mise en forme, en particulier comme rectangle tout en longueur, les deux directions de polarisation (Y, Z) des deux canaux semiconducteurs (112a, 112b) étant orthogonales l'une de l'autre.

12. Capteur THz (2) selon l'une des revendications précédentes, **caractérisé en ce que** dans la zone de compensation (9) est prévu un coupleur orthomode (212) qui divise le rayonnement d'émission THz (8) en deux ondes polarisées circulairement opposées et/ou combine des ondes polarisées orthogonalement.

13. Capteur THz (2) selon l'une des revendications précédentes, **caractérisé en ce que** dans un espace intermédiaire (19) entre la face arrière (14a) de la lentille (14) et une face avant métallique de plaque support (11a) est prévu un milieu d'atténuation (18),

le milieu d'atténuation (18) atténuant le rayonnement THz (15) dans une gamme de longueurs d'onde autour d'une longueur d'onde moyenne (λ).

14. Capteur THz (2) selon la revendication 13, **caractérisé en ce que** le milieu d'atténuation (18) présente une permittivité relative complexe $\varepsilon_r$ décrite par une partie réelle $\varepsilon'_r$ et une partie imaginaire $\varepsilon''_r$ sous la forme

$$\varepsilon_r = \varepsilon'_r + i\, \varepsilon''_r \text{ (Équation 1)}$$

où la partie imaginaire $\varepsilon''_r$ décrit une valeur d'atténuation du milieu d'atténuation (18), et
un indice de réfraction (n18) du milieu d'atténuation (18) correspond à un indice de réfraction (n14) de la lentille (14) pour éviter toute réflexion entre la face arrière de la lentille (14a) et le milieu d'atténuation (18).

15. Capteur THz (2) selon l'une des revendications précédentes, **caractérisé en ce qu'**une face avant (11a) du dispositif porteur (11) présente un biseau (20), en particulier vers le bas, dans la zone de compensation (9), en particulier dans la zone de raccordement (21) autour d'une zone de détection moyenne (17), pour diffracter au moins partiellement le faisceau réfléchi (15) incident le long de l'axe optique (A) dans l'espace intermédiaire (9) dans une direction perpendiculaire à l'axe optique (A), p. ex. latéralement vers l'extérieur.

16. Capteur THz (2) selon l'une des revendications précédentes, **caractérisé en ce que** dans le plan de réflexion (13) est conçue une structure d'interférence (22) pour faire réfléchir le faisceau réfléchi (15) incident dans la zone intermédiaire (9) en formant une interférence destructive, avec plusieurs creux (22a, 22b, 22c) pour former des réflexions avec des différences de chemin optique égales à des valeurs proportionnelles adéquates d'une ou plusieurs longueurs d'onde pertinentes (λ) d'une gamme de longueurs d'onde du rayonnement THz émis,

p. ex. avec des creux ou resp. des saillies, p. ex. des saillies de profil qui correspondent à un quart de la longueur d'onde pertinente plus un multiple entier de la moitié de la longueur d'onde pertinente.

17. Capteur THz (2) selon l'une des revendications précédentes, **caractérisé en ce que** la lentille (14) présente une face arrière de lentille (14a) convexe, p. ex. une face avant ovale et une face arrière plane et/ou structurée, avec laquelle la lentille (14) est appliquée directement ou indirectement sur le dispositif support (11).

18. Dispositif de mesure THz (1) pour mesurer un objet de mesure (6), en particulier un tuyau en plastique, en caoutchouc ou en un matériau organique, le dispositif de mesure THz (1) comportant

- au moins un capteur THz (2) selon l'une des revendications précédentes pour émettre un faisceau d'émission THz (8) et recevoir un faisceau de réflexion THz (15),
- un dispositif de commande (4) conçu pour enregistrer un signal de mesure (S1) de l'émetteur-récepteur THz (10) et pour déterminer des intervalles et/ou des épaisseurs de couche d'un objet de mesure (6),
- un espace de mesure (5) pour enregistrer l'objet de mesure (6).

19. Dispositif de mesure THz (1) selon la revendication 18, **caractérisé en ce qu'**il comporte un boîtier (30) qui englobe un espace de mesure (5) pour enregistrer l'objet de mesure (6), où le capteur THz (2) est prévu sur le boîtier (30), en particulier avec plusieurs capteurs THz (2) et/ou un agencement rotatif du capteur THz (2) sur le boîtier (30) pour le faire tourner ou circuler autour de l'espace de mesure (5) pour mesurer totalement l'objet de mesure (6).

20. Procédé de mesure THz pour mesurer des intervalles et/ou des épaisseurs de couche d'un objet de mesure (6), p. ex. d'un tuyau en plastique, en caoutchouc ou en un matériau organique, au moyen d'un capteur THz (2), où le capteur THz (2) comporte un émetteur-récepteur THz, une lentille (14) pour focaliser le rayonnement THz émis par l'émetteur-récepteur THz (10) et émettre un rayonnement d'émission THz (8) le long d'un axe optique (A) et pour recevoir un faisceau THz réfléchi (15), et une zone de compensation (9) entre la lentille et un dispositif support (11), qui accueille ou auquel est fixée la lentille (14) et/ou l'émetteur-récepteur THz (10),

le rayonnement d'émission THz (8) étant émis par l'émetteur-récepteur THz (10) du capteur THz (2) le long de l'axe optique (A) à travers un espace de mesure (5) sur l'objet de mesure (6) et étant réfléchi par des surfaces limites (g1, g2, g3, g4) de l'objet de mesure (6) du faisceau réfléchi THz (15) le long de l'axe optique (A), où le faisceau réfléchi THz (15) est détecté par l'émetteur-récepteur THz (10) dans une zone de détection (17) formée de façon centrale autour de l'axe optique (A), un signal de mesure (S1) est produit avec au moins un pic utile de réflexion (P0) et au moins un intervalle (dg1, dg2, dg3, dg4) et/ou une épaisseur de couche et/ou un indice de réfraction de l'objet de mesure (6) est déterminé à partir du signal de mesure (S1) par son exploitation, où le faisceau de réflexion (15) est influencé dans la zone de compensation (9) autour de la zone de détection (17) de sorte que des réflexions multiples (P1, P2, ...) guidées par réflexion réitérée du faisceau réfléchi (15) sur le capteur THz (2) vers l'objet de mesure (6) et produites après réflexion sur l'objet de mesure (6) par détection dans l'émetteur-récepteur THz (10) sont au moins réduites dans le signal de mesure (S1), où le capteur THz (2) émet le faisceau d'émission THz polarisé et détecte uniquement un faisceau réfléchi (15) polarisé.

21. Procédé de mesure THz selon la revendication 20, **caractérisé en ce que** le faisceau réfléchi THz (15) est influencé dans la zone de compensation (9), en particulier dans une zone de raccordement (21) se raccordant en directions latérales (YZ) à la zone de détection (17) d'au moins une des façons suivantes :

a) Rotation de la direction de polarisation, en particulier de 90°, au moyen d'une structure de transpolarisation,
b) Atténuation du faisceau réfléchi (15) dans l'espace intermédiaire (9), p. ex. par un milieu d'atténuation (18),
c) Réflexion du faisceau réfléchi (15) dans une direction latérale, en particulier à l'écart de l'axe optique (A),
d) Formation d'une interférence destructive du faisceau réfléchi (15) à nouveau réfléchi, en particulier par une structure d'interférence (22) avec une structuration fonction d'une longueur d'onde pertinente, p. ex. un quart de la longueur d'onde moyenne ($\lambda/4$).

Fig. 1

Fig. 2

Fig. 3

Fig. 4

## Fig. 5

8

15

## Fig. 6

16   16a   16b

$\alpha16 = 45°$

16
16a
16b

$b16 < \lambda$

$h16 = \lambda/4$

EP 4 256 272 B1

**Fig. 7**

**Fig. 8**

**Fig. 9**

24

**Fig. 10**

**Fig. 11**

Fig. 13

Fig. 12

Fig. 14

**EP 4 256 272 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2013149846 A
- DE 102016120665 B3
- JP 2002223017 A
- JP 2015188174 A
- DE 102015122205 A1
- WO 2021123111 A1
- JP 2008283552 A
- DE 102017125555 A1
- WO 2022057980 A1